# EUROPÄISCHE PATENTSCHRIFT

(11) **EP 1 299 017 B1**
(45) Veröffentlichungstag und Bekanntmachung des Hinweises auf die Patenterteilung: **28.10.2009**
(21) Anmeldenummer: 01960421.4
(22) Anmeldetag: 28.06.2001
(51) Int. Cl.: A46B 3/22

(54) **VERFAHREN ZUR HERSTELLUNG VON BORSTENWAREN SOWIE BORSTENWARE**
METHOD FOR PRODUCING BRISTLE PRODUCTS AND BRISTLE PRODUCTS
PROCEDE DE PRODUCTION DE PRODUITS A POILS DE BROSSERIE ET PRODUIT A POILS DE BROSSERIE

(30) Priorität: 10.07.2000 DE 10033256
(43) Veröffentlichungstag der Anmeldung: 09.04.2003
(73) Patentinhaber: GEKA BRUSH GMBH, 91572 Bechhofen-Waizendorf (DE)
(72) Erfinder: WEIHRAUCH, Georg, 69483 Wald-Michelbach (DE)
(74) Vertreter: Schneck, Herbert
(86) Internationale Anmeldenummer: PCT/EP2001/007439
(87) Internationale Veröffentlichungsnummer: WO 2002/003831

(56) Entgegenhaltungen:
- EP-A- 0 676 268
- EP-A- 0 893 225
- DE-A- 4 034 811

## Beschreibung

Die Erfindung betrifft ein Verfahren zur Herstellung von Borstenwaren mit wenigstens einem Träger und daran angeordneten Borsten aus einem gießfähigen Kunststoff, wobei die Borsten aus der Kunststoffschmelze durch Spritzgießen in borstenformende. Kanäle hergestellt werden. Ferner betrifft die Erfindung Borstenwaren selbst.

Borstenwaren, zu denen im vorliegenden Zusammenhang insbesondere Bürsten jeder Art, Pinsel und Besen zählen, werden überwiegend auf mechanischem Wege hergestellt, indem zunächst der Borstenträger mit Löchern gefertigt und nachträglich die Borstenbündel mechanisch eingesetzt werden. Mit dem Aufkommen von Kunststoffen sind die Bürstenkörper durch Gießen oder Spritzgießen hergestellt und die Borsten entweder in der herkömmlichen mechanischen Weise oder aber in jüngerer Zeit auch durch thermische Verfahren befestigt worden. In all diesen Fällen müssen zunächst Borsten-Monofile in einem Extrusions- oder Spinnprozeß hergestellt, die Monofile gegebenenfalls geschnitten und anschließend die Borsten am Träger befestigt werden. Bei der heute noch überwiegend verwendeten Ankertechnik werden die Borsten geschlauft und mit einem Anker aus Metall in den Bürstenkörper gestanzt.

Es hat deshalb nicht an Versuchen gefehlt, zur weiteren Rationalisierung die Borsten oder Bündel zusammen mit einem Träger einstückig zu formen und den Träger mit dem Bürstenkörper zu verbinden. So ist schon vor mehr als hundert Jahren vorgeschlagen worden ( GB 788/1861, GB 24 935/1896), die Borsten und einen sie verbindenden Träger aus einem elastischen Material, wie Gummi oder dergleichen, zu gießen und nachträglich an dem eigentlichen starren Bürstenkörper zu befestigen. Ferner ist es bekannt (DE 941 364,GB 2 151 971, US 301 644, 4 244 076, US 5,040,260, US 5,966,771, WO 98/03097), zu Gruppen zusammengefaßte Reinigungselemente zusammen mit einem sie verbindenden Träger in einem Spritzgießvorgang herzustellen und den Träger nachträglich oder im Zweikomponenten-Spritzguß mit dem Bürstenkörper zu verbinden. Schließlich ist es bekannt, den gesamten Bürstenkörper und die Borsten als einstückiges Spritzgießteil herzustellen (US 5,926,900).

Bürsten dieser Art konnten sich in der Praxis nur im Bereich der Haarpflege oder - in geringem Umfang - als Einmalbürsten einführen. Grund für die mangelnde Eignung und Akzeptanz ist die Tatsache, daß spritzgegossene Borsten eine viel zu geringe Biegewechselfestigkeit aufweisen, weil sie im Gegensatz zu Borsten, die in einem Spinnprozeß gewonnen werden, nicht die für die Stabilität notwendige Molekularstruktur, die sich vor allem durch eine borstenparallele Längsorientierung der Molekülketten auszeichnet, besitzen. Sie sind deshalb eher als Arbeits- oder Reinigungselemente denn als Borsten zu bezeichnen. Die mangelnde Stabilität ist insbesondere im Ansatzbereich der Arbeitselemente am Träger festzustellen, weil dort eine Orientierung der Moleküle vollständig fehlt. Dies führt dazu, daß die unmittelbar nach der Herstellung ordentlich ausgerichteten Arbeitselemente nach kurzer Benutzungsdauer ihre Position verändern, insbesondere sich verbiegen, abknicken und nicht wieder aufrichten (bend-recovery). Ferner erfordert diese Technologie die Verwendung ein und desselben Kunststoffs für die Arbeitselemente und den Träger, was bei hochwertigen Kunststoffen, aus denen Borsten mit hohem Anforderungsprofil bestehen müssen, zu entsprechend hohen Kosten führt. Jede Kostenreduzierung erzwingt einen Kompromiß in der Auswahl des Kunststoffs. Stets verbleiben aber die erheblichen gebrauchstechnischen Nachteile, mit der Folge, daß Bürsten dieser Art nur für wenige Anwendungsfälle geeignet sind. Es ist auch keine auf das jeweilige Anforderungsprofil abgestellte Differenzierung des Werkstoffs für den Träger und die Borsten oder für die Borsten untereinander möglich, insbesondere was die mechanische Festigkeit, den werkstoffeigenen Reibwert, die Farbe etc. betrifft.

Ferner sind Bürsten bekannt (US 2 621 639), bei denen die Arbeitselemente ("pins") keine Borsten im eigentlichen Sinn, sondern Stifte, Bolzen, Streifen oder dergleichen sind. Es handelt sich um spritzgegossene Elemente, die zumeist aus Gummi oder gummielastischen Kunststoffen, z.B. Elastomeren, bestehen und einen größeren Querschnitt, meist auch eine kürzere Länge als Borsten aufweisen. Diese gedrungene Bauart der "Borste" ist aus zwei Gründen zwingend notwendig. Zum einen wird nur dadurch eine einigermaßen befriedigende Stabilität und Wechselfestigkeit erhalten, zum anderen dürfen aus spritzgießtechnischen Gründen die Formkanäle nicht zu eng und zu tief sein, um einerseits eine ausreichende Formfüllung zu gewährleisten, andererseits ein Entformen zu ermöglichen. Die maßgeblichen Eigenschaften dieser "pins" bestehen in einer weichen Wirkung auf der von ihnen bestrichenen Oberfläche bei einem erhöhten Reibungskoeffizienten, also in einer Art Streich- und Massagewirkung, ohne eine aktive Bürstwirkung zu erreichen. Typischer Anwendungsfall sind Haarbürsten, die vornehmlich zum Vereinzeln und Ordnen der Haare dienen und die Kopfhaut nur massierend bestreichen sollen. Die Steifigkeit dieser Elemente läßt sich im wesentlichen nur durch den Durchmesser und das Verhältnis Durchmesser/Länge sowie durch die Härte des Kunststoffs beeinflussen. Die Bürste nach der US 2 621 639 wird durch Spritzgießen hergestellt, indem eine, flexible dünne Trägerplatte mit einer Perforation entsprechend der Anordnung der Arbeitselemente in eine Spritzgießform eingelegt wird, die eine Vielzahl von kanalartigen Formkavitäten aufweist, die an die Perforationslöcher des Trägers anschließen und zum Abformen der stiftförmigen Arbeitselemente dienen. Auf der gegenüberliegenden Seite - der Anspritzseite - sind Verteilerkanäle angeordnet, die den schmelzflüssigen Kunststoff, z.B. Nylon, zu den einzelnen Perforationslöchern und in die anschließenden Formkanäle leiten. Die Formkanäle weisen im unmittelbaren Anschluß an die Perforation des Trägers zunächst eine Erweiterung auf. Auf diese Weise wird beiderseits der dünnen Trägerplatte eine Verdickung erzeugt, so daß das Arbeitselement in beiden Richtungen axial fixiert ist. Obgleich das verwendete Nylon zur Erzielung borstenähnlicher Eigenschaften geeignet wäre, werden diese hier nicht genutzt, weil zumindest am Fuß der Reinigungselemente aufgrund der Verdickung eine längsorientierte Molekularstruktur nicht entstehen kann. Gleiches gilt für eine andere bekannte Haarbürste (EP-B1-0 120 229), bei der zunächst ein Träger mit hülsenförmigen, konischen Ansätzen gespritzt wird und anschließend in die Hülsen ein weiterer Kunststoff als Kern eingespritzt wird, der mit einer Verdickung auf der offenen Hülsenmündung aufliegt. Auf der Rückseite sind die Kerne über eine stoffeigene zweite Trägerplatte verbunden. Auch hier steht eine formschlüssige, axialfeste Verbindung beider Teile im Vordergrund und werden die Arbeitselemente dadurch noch klobiger.

Auch bei Zahnbürsten und Besten sind solche Reinigungselemente bekannt (US 5 040 260, US 5 966 771). Diese Bürsten sind zweiteilig ausgebildet. Es ist schließlich bei Zahnbürsten bekannt -(US 1 924 152, 2 139 242, DE 826 440, WO 00/64307), den Borstenbesatz aus herkömmlichen Borsten mit ihrer anerkannt guten Putzwirkung und bolzen- bzw. stiftartigen Reinigungselementen aus gummielastischem Kunststoff zu kombinieren.

Der Erfindung liegt die Aufgabe zugrunde, ein Verfahren zur Herstellung von Borstenwaren vorzuschlagen, bei dem die bekannten Vorteile der SpritzgieBtechnik genutzt werden können, gleichwohl die Herstellung von Borstenwaren möglich wird, deren Borsten an die Qualität und die gebrauchstechnischen Eigenschaften von spinnextrudierten Borsten heranreichen.

Ausgehend von dem bekannten Verfahren, bei dem die an einem Träger angeordneten borstenartigen Arbeitselemente durch Spritzgießen einer Kunststoffschmelze in sie formende Kanäle hergestellt werden, wird die Erfindungsaufgabe dadurch gelöst, daß
- der Träger mit nach Art von Spinndüsen wirkenden Durchbrüchen hergestellt und
- die Durchbrüche, an die sich die Kanäle anschließen, wenigstens auf einem Teil ihrer Höhe mit einer kleinsten Weite von ≤3mm versehen werden,
- das Verhältnis dieser Weite zu dem sich aus der Höhe der Durchbrüche und der Länge der Kanäle ergebenden Fließweg der Schmelze ≤1:5 gewählt wird,
- die Kunststoffschmelze von mindestens einer Seite des Trägers - der Zuführseite der Schmelze - durch die Durchbrüche hindurch unter Bildung der Borsten in die Kanäle gespritzt wird.

Das vorgenannte Verhältnis wird vorzugsweise kleiner/gleich 1:10 gewählt. Die Untergrenze dieses Verhältnisses kann im Bereich von 1:250 liegen.

Mit dem erfindungsgemäßen Verfahren wird ein neuer Weg bei der Fertigung von Borstenwaren beschritten. Der Träger, an dem die Borsten angeordnet sind und der den Bürstenkörper selbst oder einen Teil desselben, z.B. in Form einer Einlage oder dergleichen, bilden kann, dient gleichzeitig als gleichsam verlorenes "Werkzeug" für die Erzeugung der Borsten durch Spritzgießen. An den nach Art einer Spinndüse wirkenden Durchbrüchen entsteht aufgrund von Staueffekten und Wandreibung eine Dehnströmung mit relativ hohen Scherkräften im wandnahen Bereich. Diese führen dazu, daß die Molekularstruktur innerhalb der Schmelze bzw. des Plastifikats in Strömungsrichtung orientiert wird und sich diese Orientierung in den borstenformenden Kanälen fortsetzt, wobei die erfindungsgemäß gewählte Fließlänge der Schmelze im Verhältnis zur engsten Stelle der Durchbrüche die molekulare Längsorientierung optimiert. Diese Selbstverstärkung der Borsten durch Längsorientierung der Molekülketten tritt besonders augenfällig bei teilkristallinen Thermoplasten in Erscheinung. Hinzukommt, daß bei der erfindungsgemäß hergestellten Borstenware gegenüber einer einstückig hergestellten eine kurze Teillänge der Borste, nämlich deren Wurzel, in dem Träger angeordnet und von diesem abgestützt ist. Dieser Wurzelbereich ist der festigkeitsmäßig sensibelste Bereich, weil dort die Orientierung der Moleküle noch nicht vorhanden oder nur mäßig ausgeprägt ist. Durch diese Stabilisierung ergibt sich eine höhere Biegefestigkeit, insbesondere Biegewechselfestigkeit, aber auch eine höhere Zugfestigkeit. Gegenüber der bekannten Technologie einstückig gespritzter Borstenwaren läßt sich die für eine vorgegebene Auslenkung der Borste notwendige Biegekraft um 40% und mehr steigern. Auch der Elastizitätsmodul wird merklich angehoben. Da auch die Zugfestigkeit wesentlich erhöht wird, lassen sich die Borsten auch bei kleinem Querschnitt und großer Länge leicht entformen.

Mit dem erfindungsgemäßen Verfahren lassen sich grundsätzlich alle gießfähigen Kunststoffe verarbeiten, wobei im Hinblick auf das Anforderungsprofil für Borsten Thermoplaste oder Thermoelaste oder Mischungen (Legierungen) derselben bevorzugt eingesetzt werden, da bei diesen Kunststoffen sich auch die Molekularorientierung am ausgeprägtesten zeigt.

Für den Träger können grundsätzlich beliebige Werkstoffe eingesetzt werden, insbesondere Kunststoffe mit anderen mechanischen Eigenschaften als diejenigen der Borsten, Kunststoffe mit anderen Modifikationen, Farben oder dergleichen, aber auch Nicht-Kunststoffe, wie Holz, Metall oder dergleichen. Die Durchbrüche können, je nach Werkstoff des Trägers, durch Gießen, Schmelzen, Lasern, Spritzgießen, Stanzen, Bohren oder dergleichen eingebracht werden. Sie können in beliebiger Anordnung vorgesehen werden. Bei einer sehr engen Anordnung, die mit dem erfindungsgemäßen Verfahren möglich wird, stehen die Borsten entsprechend eng nach Art von Bündeln, Streifen oder Paketen. Stattdessen können die Durchbrüche auch mit größerer Distanz angeordnet sein, um mit größerem Abstand einzeln stehende Borsten zu erzeugen. Solche Anordnungen können auch miteinander kombiniert werden, um einen Borstenbesatz beliebiger Konfiguration zu erzeugen. Schließlich können die Durchbrüche auch achsparallel profiliert sein, um längsprofilierte Borsten zu erzeugen.

In bevorzugter Ausführung ist vorgesehen, daß die Durchbrüche selbst mit einem solchen Quer- und/oder Längsschnitt ausgelegt werden und/oder der Spritzdruck so gewählt wird, daß sich in der die Durchbrüche passierenden Schmelze ähnlich wie beim Spinnen von Borsten-Monofilen eine molekulare Längsorientierung zumindest im peripheren Bereich der Borsten ausbildet.

Das Ausmaß der molekularen Längsorientierung läßt sich einerseits durch den Querschnitt und durch die absolute Höhe der Durchbrüche beeinflussen. Je enger der Querschnitt und größer die Höhe der Durchbrüche ist, um so ausgeprägter ist die Scherströmung beim Durchspritzen der Schmelze. Die Scherströmung wird auch durch den Spritzdruck bzw. die Spritzgeschwindigkeit beeinflußt. So hat sich bei der erfindungsgemäßen Verfahrenstechnik gezeigt, daß mit zunehmender Einspritzgeschwindigkeit die Biegefestigkeit der Borste merklich zunimmt, insbesondere wenn die Parameter kleinste Weite der Durchbrüche und Verhältnis dieser Weite zum Fließweg der Schmelze beachtet werden.

Die Ausbildung der Scherströmung läßt sich ferner durch die Form der Durchbrüche in radialer und axialer Richtung beeinflussen. Bei Durchbrüchen mit profiliertem Querschnitt bildet sich in den Profilkonturen eine stärkere Scherströmung als im Kern aus. Auch ein von der Anspritzseite zur gegenüberliegenden Seite abnehmender Querschnitt führt zur Austrittsseite hin zu einem steileren Geschwindigkeitsprofil. Beispielsweise läßt sich durch konische oder stufenartige Verengungen eine Dehnströmung mit längsorientierender Wirkung auf die Molekülketten erzeugen.

Vorzugsweise werden die Durchbrüche im Träger mit einer solchen Höhe vorgesehen, daß die durchgespritzten Borsten in dem Bereich von dem Träger umfaßt werden, in welchen noch keine ausreichende molekulare Längsorientierung stattgefunden hat. Dies ist also der Bereich unmittelbar am Ansatz der Borsten.

Das erfindungsgemäße Verfahren gibt die Möglichkeit, die Borsten mit unterschiedlicher Länge zu spritzen, so daß die Enden der Borsten an der fertigen Borstenware auf einer nicht-ebenen Hüllfläche liegen.

Durch die nach Art von Spinndüsen arbeitenden Durchbrüche am Träger wird eine molekulare Längsorientierung unabhängig von der Borstenlänge erreicht, so daß auch unterschiedlich lange Borsten ein gleich gutes Biegeverhalten und Wiederaufrichtvermögen besitzen. Die Formkanäle für die Borsten lassen sich sehr genau tolerieren, so daß am vollständigen Borstenbesatz eine exakt vorgegebene Topographie erzielt werden kann, die auf den jeweiligen Einsatzzweck der Borstenware abgestellt ist. Bei herkömmlichen Bürsten, insbesondere Zahnbürsten, wird diese Topographie durch mechanische Bearbeitungsverfahren erzeugt, die zwangsläufig keine großen Genauigkeiten zulassen.

Ferner können die Borsten beim Spritzgießen mit unterschiedlich geformten Enden hergestellt werden, um auch so die Aktion einzelner Borsten oder des gesamten Borstenbesatzes auf den Einsatzzweck abzustimmen.

In einer weiteren Verfahrensvariante wird die Kunststoffschmelze für die Borsten an den Durchbrüchen zur Erzeugung hohler Borsten ringförmig geführt.

In diesem Fall wird die Kunststoffschmelze ringförmig in die Durchbrüche eingespritzt und in die Kanäle durchgespritzt. Es werden hohle Borsten erhalten, die entweder am freien Ende offen oder geschlossen sind. Im ersten Fall sind sie kanalartig ausgebildet. Hier findet durch die Wandreibung eine molekulare Orientierung nicht nur an der Außenseite, sondern auch an der Innenwandung der hohlen Borste statt. Die hohle Borste kann gegebenenfalls mit beliebigen Füllstoffen gefüllt werden, die an den Gebrauchszweck angepaßt sind.

Stattdessen kann auch vorgesehen sein, daß nach dem Spritzgießen der hohlen Borsten und Entformen derselben in den Hohlraum der Borsten eine weitere Kunststoffschmelze zur Erzeugung einer Kernborste eingespritzt wird. Auch hier findet aufgrund der Scherströmung am Einlauf der hohlen Borste und durch Wandreibung an deren Innenwand eine molekulare Längsorientierung an der Oberfläche der Kernborste statt.

Auf diese Weise wird eine Mehrkomponentenborste erhalten, wobei die Kunststoffkomponenten wiederum auf den Gebrauchszweck abgestimmt werden können. Beispielsweise kann der die hohle Borste ausfüllende Kern aus einem preiswerteren und/oder biegesteiferen Werkstoff bestehen, während der Außenmantel auf den Anwendungszweck der Borstenware abgestimmt ist, beispielsweise als Nutzschicht dient, um eine mehr polierende oder mehr schleifende Wirkung zu erzeugen. Der Mantel kann auch eine weichere Nutzschicht in der Weise bilden, daß bei deren Abnutzung der Innenkern freigelegt und insbesondere bei unterschiedlicher Farbe von Kern und Mantel als Verbrauchsanzeige genutzt wird. Selbstverständlich kann auch die Innenwandung der hohlen Borste bzw. der eingespritzte Kern profiliert sein, um die Haftung zu verbessern. Zugleich wird durch die vergrößerte Oberfläche die Wandreibung der Schmelzeströmung erhöht und die molekulare Längsorientierung unterstützt.

Die hohle Borste kann mit Perforationen gespritzt und die weitere Kunststoffschmelze für die Kernborste durch die Perforation unter Bildung von die Borste überragenden Vorsprüngen durchgespritzt werden. Dadurch lassen sich an der Oberfläche der Borste unterschiedliche Strukturen sowohl durch die Formgebung der Vorsprünge, als auch durch die Materialwahl erhalten. Die Vorsprünge können noppenartig, fingerartig oder fadenförmig ausgebildet sein. Die Perforationen können durch entsprechende Dimensionierung wiederum als eine Art Spinndüse wirken.

Stattdessen kann auch zunächst eine Kernborste vorgespritzt und anschließend mit einer Kunststoffschmelze für eine sie umgebende Hohlborste zumindest teilweise umspritzt werden.

In weiterhin bevorzugter Ausführung wird der Träger an der Schmelze-Zuführseite mit wenigstens einer Vertiefung und mit wenigstens einem von dieser zur gegenüberliegenden Seite ausgehenden Durchbruch versehen und wird die Vertiefung beim Spritzgießen zumindest teilweise mit der Kunststoffschmelze der Borsten ausgefüllt.

Durch diese Maßnahme ist zum einen eine entsprechende Schmelzereserve gegeben, aus der heraus bei erhöhtem Nachdruck Schmelze in die Borsten nachgeschoben werden kann. Zum anderen sind die Borsten untereinander über diese Schmelzereserve an ihrer Rückseite ganz oder teilweise verbunden und damit in Auszugsrichtung formschlüssig festgelegt. Sofern die Borsten mit der Wandung der Durchbrüche nicht verschweißen, werden die Auszugskräfte in diese Kunststoffreserve an der Rückseite des Trägers abgeleitet und dort aufgenommen. Die Vertiefung kann an der den Borsten abgekehrten Seite des Trägers großflächig ausgebildet sein, aber auch in einer Anordnung von distanzierten oder sich gitterförmig kreuzenden Rinnen ausgebildet sein, von denen die Durchbrüche ausgehen. Nach dem Einspritzen des Borstenmaterials sind die Borsten rückseitig über die Vertiefung ausfüllende, gegebenenfalls flexible Leisten bzw. Gitter miteinander verbunden. Da in der Regel nur die Borsten aus einem hochwertigen Kunststoff bestehen müssen, ergibt sich eine kostensparende Ausbildung, die zugleich zu dekorativen Zwecken auf der Trägerrückseite dienen kann.

In einer anderen Ausführungsform wird ein räumlicher, z.B. wenigstens teilzylindrischer Träger mit nach Art von Spinndüsen wirkenden Durchbrüchen hergestellt und die Kunststoffschmelze für die Borsten von innen her durch die Durchbrüche durchgespritzt.

Auf diese Weise lassen sich Borstenwaren mit gewölbtem Träger herstellen, wobei sich auch hier im Gegensatz zu mechanischen Befestigungsverfahren eine exakte Ausrichtung und Anordnung der Borsten, gegebenenfalls mit einer geeigneten Topographie der Borstenenden erhalten läßt.

Gemäß einer Ausführung dieses Verfahrens wird der Träger als Rohrabschnitt hergestellt, wobei wiederum die Kunststoffschmelze für die Borste von innen her durch die Durchbrechungen durchgespritzt wird.

Auf diese Weise lassen sich Rundbürsten, Mascara-Bürsten etc. herstellen und auch in diesem Fall beliebige Topographien der Bürstfläche durch unterschiedlich lange Borsten erzeugen, die bisher bei Rundbürsten nicht oder in nur sehr unzulänglichem Maß verwirklicht werden konnten.

Wird der Rohrabschnitt an wenigstens einem Ende geschlossen hergestellt, lassen sich beispielsweise Toilettenbürsten, Flaschenbürsten oder dergleichen mit dem Fortgang des erfindungsgemäßen Verfahrens erzeugen.

Ferner kann der von dem räumlichen Träger umschlossene Hohlraum zumindest teilweise mit der Kunststoffschmelze für die Borsten ausgefüllt werden. Bei kleinen Querschnitten des Trägers, z.B. im Falle von Mascara-Bürsten, kann der Träger vollständig ausgefüllt und so ein massives Gebilde erhalten werden. Bei größeren Querschnitten kann eine teilweise Ausfüllung an besonders beanspruchten Stellen vorgesehen sein. Auch ist es möglich, die Teilfüllung in Form von aussteifenden Rippen oder dergleichen zu formen oder mit Kanälen zu versehen, die zur Führung von Medien zu den Borsten oder zwischen die Borsten dienen können.

Vorzugsweise wird auch der Träger aus Kunststoff durch Spritzgießen hergestellt. Er kann vorgefertigt und in eine die Kanäle aufweisende Spritzgießform eingesetzt werden.

In einer weiterhin vorteilhaften Verfahrensvariante werden der Träger und die Borsten im Mehrkomponenten-Spritzguß hergestellt, indem nach dem Spritzgießen des Trägers mit den Durchbrüchen die Kunststoffschmelze für die Borsten durch die Durchbrüche durchgespritzt wird.

Auf diese Weise lassen sich Träger und Borsten in einem einzigen Spritzgießwerkzeug herstellen. In vielen Fällen kann es sich dabei schon um die komplette Bürste handeln. Gegebenenfalls kann aber der Träger mit dem Borstenbesatz auch im Mehrkomponenten-Spritzgießverfahren oder aber in zwei oder mehr Spritzgießstufen umspritzt werden, um beispielsweise auch die Rückseite des Borstenträgers abzudekken und einen voluminöseren Bürstenkörper, gegebenenfalls auch gleich eine Handhabe, einen Griff oder dergleichen auszubilden. Auch können Träger, Körper und Borsten aus verschiedenen Kunststoffen sowie aus gefüllten oder ungefüllten, wie auch aus verschiedenfarbigen Kunststoffen bestehen.

Die Durchbrüche können mit den Kanälen fluchtend oder winklig dazu in den Träger eingebracht werden, so daß die Borsten an der fertigen Borstenware gegenüber dem Bürstenkörper beliebig ausgerichtet sein können.

Die Durchbrüche werden vorzugsweise mit einem sich von der Schmelze-Zuführseite zur gegenüberliegenden Seite verengenden Querschnitt, vorzugsweise in Stufen verengenden Querschnitt hergestellt, um ein spinndüsenartiges Strömungsprofil zu erzeugen.

Es können ferner die Durchbrüche auf der Schmelze-Zuführseite mit Einlaufschrägen versehen werden, um die Borstenwurzel innerhalb des Trägers zu verbreitern und zu stabilisieren und zugleich eine Dehnströmung zu erhalten.

Ferner können die Durchbrüche an der Schmelze-Zuführungsseite und/oder an der gegenüberliegenden Seite mit einem Kragen versehen werden, wobei ein innenseitig angeordneter Kragen in Verbindung mit der die Vertiefung ausfüllenden Kunststoffmasse zu einer Einsenkung im Bereich des Borstenfußes führt und, wie auch ein außenseitiger Kragen, eine längere Einbindung der Borsten im Träger ermöglicht. Beide Maßnahmen führen je für sich zu einer Scherströmung auf einer größeren Länge innerhalb des Trägers.

Mit Vorteil sind die Durchbrüche im Träger längs- und/oder querprofiliert. Auf diese Weise lassen sich profilierte Nutzflächen auf der Borstenaußenseite in Anpassung an den Einsatzzweck der Borstenware schaffen. Auch wird die Wandreibung aufgrund der größeren Oberfläche erhöht und damit die Scherströmung verstärkt.

Der Träger kann einschichtig oder wenigstens in Teilbereichen mehrschichtig oder auch aus Flächensegmenten gebildet sein, die auch aus verschiedenen Werkstoffen bestehen können. Er kann ferner eben oder beliebig gekrümmt sein.

Auch die Borsten können aus wenigstens zwei verschiedenen Kunststoffen gespritzt sein.

In bevorzugter Ausführung werden die Durchbrüche in dem Träger entsprechend der Anordnung der Borsten im endgültigen Borstenbesatz der Bürste eingebracht, wobei, wie bereits oben angedeutet, bündel-, streifen- oder paketartige oder einzeln stehende Anordnungen gewählt und auch miteinander kombiniert werden können.

In einer weiterhin bevorzugten Ausführung werden die durch den Träger durchgespritzten Borsten anschließend durch Längen verstreckt, wie dies für bolzenartige Arbeitselemente an sich bekannt ist (DE 21 55 888). Dies kann im unmittelbaren Anschluß an den Spritzgießvorgang noch innerhalb des Spritzgießwerkzeugs durch entsprechendes Verfahren der Werkzeugteile oder aber nach dem Auswerfen in einem nachträglichen Arbeitsgang geschehen. Durch das Verstrecken unter Einwirkung von Zugkräften erfolgt eine weitere Längsorientierung der Moleküle. Zusätzlich kann durch Biegewechselkräfte eine Dehnung in die Borsten eingebracht werden, die gleichfalls eine molekularorientierende Wirkung hat und bei späterem Gebrauch als Dehnungsreserve beim Biegen der Borsten zur Verfügung steht.

Um das Verstrecken unter Zugkraft zu fördern, kann an den Enden der Borsten ein Widerlager z.B. in Form einer Verdikkung angespritzt werden. Das Verstrecken erfolgt dann durch eine den Abstand zwischen Träger und Widerlager vergrößernde Zugkraft, wobei zugleich die Verdickungen borstenbündig umgeformt werden können. Es können auch mehrere oder alle Borsten verbindende Widerlager angespritzt werden, die später abgetrennt werden. Das Strecken kann in einem Zug oder auch in mehreren Stufen mit geringerer Zugkraft in jeder Stufe oder auch nur auf Teillängen der Borsten erfolgen.

Gegebenenfalls kann statt des Verstreckens oder zusätzlich dazu auch ein Stabilisieren, beispielsweise auf thermische oder chemische Art oder auch durch Modifikatoren im Kunststoffmaterial vorgesehen werden. Auf diese Weise erhalten die spritzgegossenen Borsten Stabilitätswerte, die noch stärker an diejenigen extrudierter bzw. gesponnener Borsten heranreichen.

Werden für den Träger und die Borsten gleiche Kunststoffe eingesetzt, kann der Spritzgießvorgang so gesteuert werden, daß die Borsten mit dem Träger verschweißen. Dies gilt auch dann, wenn unterschiedliche Kunststoffe eingesetzt werden, die eine ausreichende Affinität zueinander haben. Im letzteren Fall werden die Kunststoffe für Träger und Borsten so ausgewählt oder modifiziert, daß sie der jeweiligen Beanspruchung genügen, wobei in der Regel für die Borsten hochwertigere Thermoplaste eingesetzt werden. Das Verschweißen oder Verschmelzen der Borsten mit dem Träger führt zu einer spaltenfreien Verbindung. Eine solche Bürste genügt höchsten Hygieneanforderungen, wie sie beispielsweise an Zahnbürsten, medizinisch-therapeutische Bürsten oder auch an solche Bürsten gestellt werden, die bei der Verarbeitung und Bearbeitung von Lebensmitteln verwendet werden. Diese Eigenschaft kann noch dadurch gefördert werden, daß für die Borsten und/oder den Träger antimikrobiell ausgerüstete Kunststoffe eingesetzt werden.

Es kann ferner zumindest für die Borsten ein Kunststoff eingesetzt werden, der die chemischen, physikalischen, mechanischen oder gebrauchstechnischen Eigenschaften beeinflußt. Dabei kann es sich um gefüllte Kunststoffe handeln, beispielsweise solche, die mit Partikeln, Fasern oder dergleichen gefüllt sind. Bei fasergefüllter Schmelze richten sich auch die Fasern beim Durchspritzen der Durchbrüche in Längsrichtung aus und unterstützen durch Fremdverstärkung die durch Molekularorientierung der Borste erhaltene Eigenverstärkung. Fasern oder Füllstoffe können auch aus dem gleichen Polymer wie die Schmelze bestehen und in diese eingemischt werden, gegebenenfalls aber auch modifiziert sein, um den Schmelzpunkt anzuheben, damit sie als Festkörper in der Schmelze verbleiben und zur Strukturierung der Oberfläche der Borste führen. Liegen die Schmelzpunkte von Borsten- und Fasermaterial nahe beieinander, wird die Einbindung durch oberflächiges Anschmelzen verbessert. Die stabilisierende Funktion der Fasern ist dann besonders ausgeprägt, wenn sie selbst von einem gesponnenen Monofil erhalten sind.

Ferner besteht eine Vorrichtung zur Herstellung von Borstenwaren mit wenigstens einem Träger und daran angeordneten Borsten aus einem gießfähigen Kunststoff aus einer Spritzgießform mit einem Zuführkanal für die Kunststoffsschmelze, einem daran anschließenden Raum für den Träger und von diesem Raum ausgehenden Formkanälen, in die die Schmelze eingespritzt wird. Eine solche Vorrichtung ist für das einstückige Spritzen von Träger und borstenartigen Arbeitselementen bekannt (GB 2 151 971 A).

Eine erste Variante einer solchen Vorrichtung zeichnet sich dadurch aus, daß in den Raum, an den die Formkanäle anschließen, ein Träger mit nach Art von Spinndüsen ausgebildeten Durchbrüchen einsetzbar ist, die auf wenigstens einem Teil ihrer Höhe eine kleinste Weite von kleiner/gleich 3mm aufweisen, daß die Durchbrüche an die Formkanäle anschließen und die Verbindung zwischen den Formkanälen und dem Zuführkanal zum Durchspritzen der Kunststoff-Schmelze in die Formkanäle bilden, wobei das Verhältnis der kleinsten Weite der Durchbrüche zu dem sich aus der Höhe der Durchbrüche und der Länge der Kanäle ergebenden Länge kleiner/gleich 1:5, vorzugsweise kleiner/gleich 1:10 bis 1:250 ist.

Der Träger aus jedem beliebigen Werkstoff wird in herkömmlicher Weise durch Gießen, Spritzgießen oder mechanische Bearbeitungsvorgänge mit den Durchbrüchen versehen und in den Formraum der Spritzgießform so eingesetzt und positioniert, daß die Durchbrüche in Anspritzrichtung vor den Kanälen angeordnet sind und an diese vorzugsweise bündig anschließen. Damit ist eine Verbindung zwischen dem Schmelze-Zuführkanal und den die Borste bildenden Formkanälen hergestellt. Beim Spritztakt dringt die Schmelze aus dem Zuführkanal in den Formraum und durch die Durchbrüche des Trägers in die Kanäle ein. In den Durchbrüchen findet aufgrund ihrer Wirkung als eine Art Spinndüse bereits eine Längsorientierung der Moleküle in der Schmelze bzw. im Plastifikat statt, die in den Kanälen fortgeführt wird. Der weniger stark orientierte Wurzelbereich der Borsten mit geringer Biegefestigkeit und Zugfestigkeit ist in dem Träger eingebunden.

Eine andere Variante der Vorrichtung, besteht darin, daß ein Teil der mehrteiligen Spritzgießform einen weiteren in den Formraum mündenden Zuführkanal für eine Kunststoff-Schmelze und eine Kavität zum Spritzgießen des Trägers mit nach Art von Spinndüsen wirkenden Durchbrüchen und eine der Anzahl der Durchbrüche entsprechende Anzahl von beweglichen Stiften aufweist, die in einer ersten Spritzstufe die Kavität für den Träger durchgreifen und die Formkanäle verschließen und in einer zweiten Spritzstufe aus der Kavität zurückgezogen werden . In der ersten Stufe wird der Träger mit den Durchbrüchen gespritzt und nach Ziehen der Stifte in einer zweiten Stufe die Borsten durch die jetzt freigelegten Durchbrüche hindurchgespritzt.

Stattdessen kann auch eine Einrichtung vorgesehen sein, mit welcher der in der Kavität gespritzte Träger in den Formraum umsetzbar und dort derart positionierbar ist, daß die Durchbrüche etwa bündig an die Formkanäle anschließen und die Verbindung zwischen den Formkanälen und dem Zuführkanal zum Durchspritzen der Kunststoff-Schmelze in die Formkanäle bilden.

Bei einer dritten Variante wird in dem Formraum zunächst der Träger, gegebenenfalls in mehreren Stufen, gespritzt und nach Verlagern vor eine weitere Spritzgießform mit den borstenformenden Kanälen die Schmelze für die Borsten durch den Träger durchgespritzt.

Bei allen vorgenannten Ausführungen der Vorrichtung besteht der Träger aus einem spritzgießfähigen Kunststoff und wird mit seinen spinndüsenartigen Durchbrüchen in einer ihm entsprechenden Kavität einer Spritzgießform hergestellt und wird anschließend - wie beim bekannten Mehrkomponentspritzguß - in derselben Spritzgießform oder in einer weiteren Spritzgießform nach einer Verlagerung des Trägers oder der Form mit dem Träger die zweite Kunststoffkomponente für die Borsten gespritzt. Hiermit läßt sich bei geeigneter Auslegung der Spritzgießanlage eine hohe Taktzeit erreichen. Sind die Kunststoffe von Träger und Borsten ausreichend affin, verschweißen sie im Bereich der Durchbrüche miteinander. In allen Fällen weisen die Durchbrüche auf wenigstens einem Teil ihrer Länge eine kleinste Weite von kleiner/gleich 3mm auf und ist das Verhältnis dieser Weite zu dem sich aus der Höhe der Durchbrüche und der Länge der Formkanäle ergebenden Länge kleiner/gleich 1:5, vorzugsweise ≤1:10.

Bei allen Varianten der Vorrichtung kann vorgesehen sein, daß der Träger an der Seite des Zuführkanals wenigstens eine Vertiefung aufweist, von der die Durchbrüche ausgehen und die ein Teil der Kunststoff-Schmelze der Borsten aufnimmt.

Es ist also entweder der Träger mit der Vertiefung vorgefertigt, um anschließend in den Formraum eingesetzt zu werden, oder wird die Vertiefung beim Spritzgießen der ersten Komponente an dem Träger eingeformt. Beim anschließenden Spritzen der Borsten wird die Vertiefung mit der zweiten Komponente, die die Borsten bildet, zumindest teilweise ausgefüllt, so daß die Borsten an ihren Wurzeln miteinander verbunden sind. Vertiefung meint hier jede Art von Höhlung, die zur Verbindung der Borsten führt. Sie kann vollflächig alle Borsten rückseitig erfassen, aber auch aus einzelnen Stegen oder gitterförmig angeordneten Stegen bestehen, die die Borsten miteinander verbinden. Die in der Vertiefung vorhandene Schmelzereserve kann beim Nachdruck des Spritzgießaggregates zur Nachlieferung von Schmelze an die Borsten dienen. Im erstarrten Zustand stellt sie eine Art Formschluß zwischen Borsten und Träger her und nimmt die an der Borste wirkenden Auszugskräfte zumindest teilweise auf. Sie kann ferner zusammen mit dem Träger den Bürstenkörper bilden. Da der Träger in der Spritzgießform eingespannt ist, kann die Kunststoffschmelze für die Borsten mit hohem Druck eingespritzt werden, auch wenn der Träger noch nicht ganz erstarrt oder aus einem nachgiebigen Kunststoff, z.B. einem Elastomer, besteht, da die spinndüsenartigen Durchbrüche formhaltig bleiben.

Ferner kann vorgesehen sein, daß zumindest ein Teil der Formkanäle an ihrer dem Träger zugekehrten Öffnung einen sich gegenüber dem Querschnitt der zugehörigen Durchbrüche verjüngenden Querschnitt aufweist, der zu einer weiteren Einschnürung des Schmelzestroms mit molekularer Längsorientierung führt.

Die Formkanäle der Spritzgießform können unterschiedliche Länge aufweisen, um am fertigen Borstenbesatz eine konturierte Wirkungsfläche der Borstenenden zu erhalten. Gegebenenfalls können auch die Durchbrüche unterschiedliche Abstände voneinander und unterschiedliche Querschnitte aufweisen, um eine entsprechend dichte oder weniger dichte Anordnung von gegebenenfalls unterschiedlich starken Borsten am fertigen Borstenbesatz zu erhalten.

Ferner können die Formkanäle an ihren Enden unterschiedliche Formkonturen aufweisen, z.B. in einer mehr oder minder runden Kalotte oder auch spitz auslaufen, das Ende des Formkanals kann auch in mehrere dünne kapillarartige Kanäle auslaufen, um eine Art Fingerborste zu erhalten.

In einer weiteren Ausführung ist vorgesehen, daß die Formkanäle im Bereich ihrer Enden in eine erweiterte Kavität zur Bildung eines Borstenkopfs mit größerem Querschnitt oder zur Bildung eines Widerlagers an den Enden der Borsten münden. Im letztgenannten Fall sind Mittel vorgesehen, um nach dem Spritzgießen der Borsten den Abstand zwischen dem Träger und dem Widerlager unter Verstrecken der Borsten zu vergrößern.

Mit dieser Vorrichtung ist es möglich, spritzgegossene Borsten nach ihrer Erzeugung zu veredeln, indem, wie beim Extrudieren von Monofilen, durch das anschließende Verstrecken der gesamten Länge oder von Teillängen der Borsten, die Längsorientierung der Polymermoleküle gesteigert wird, so daß die Borste eine hervorragende Biegefestigkeit und vor allem Biegewechselfestigkeit bei gleichzeitiger Erhöhung des Elastitätsmoduls erhält. Dadurch bleibt auch bei gespritzten Borsten die Ausrichtung der Borste selbst nach längerer Benutzungsdauer erhalten. Gleichermaßen wird die Oberflächenhärte verbessert, so daß auch punktuelle äußere Kräfte bei der Benutzung nicht zu Oberflächendefekten und damit zu knickschwachen Stellen führen. All dies gilt für kristalline bzw. teilkristalline Polymere in besonderem, jedoch auch für mehr oder weniger amorphe Polymere in entsprechendem Maß.

In besonders vorteilhafter Ausführung sind die Mittel zur Abstandsvergrößerung von den Mitteln zum Öffnen und Schließen der Spritzgießform gebildet. Je nach Ausmaß der vom Querschnitt abhängigen, gewünschten oder möglichen Längung der Borste beim Verstrecken, kann ein mehr oder minder großer Teil des Öffnungswegs der Spritzgießform, für das Verstrecken genutzt werden. Nach dem Verstrecken werden die beim Spritzgießen hergestellten Widerlager an den Borstenenden abgetrennt und verworfen. Die nun freien Borstenende können mechanisch nachbearbeitet, z. B. durch Schleifen oder auf andere Art verrundet oder konifiziert werden. Sind die Widerlager nur am Ende jeder einzelnen Borste angeordnet, können sie beim Verstrecken auch borstenbündig verformt werden.

In einer weiterhin bevorzugten Ausführung sind an der den Formkanälen gegenüberliegenden Wandung des Raums für den Träger stiftförmige Schieber angeordnet, die durch die Durchbrüche des Trägers in die Formkanäle mit Abstand von deren Wandung unter Bildung eines Ringraums zwischen sich und dem Durchbruch einfahrbar und nach Durchspritzen der Kunststoffschmelze durch den Ringraum unter Bildung von Hohlborsten ausfahrbar sind, wobei die Formkanäle und/oder die Stifte so ausgebildet und zugeordnet sind, daß offene oder geschlossene Hohlborsten erzeugt werden.

In die Hohlborste oder in einen Teil derselben kann in einer zweiten Spritzstufe eine weitere Kunststoffschmelze zur Bildung einer Kernborste eingespritzt werden.

Vorzugsweise fluchten die spinndüsenartigen Durchbrüche im Träger mit den Formkanälen der Spritzgießform. Sie können aber auch winklig zu den ihnen zugeordneten Durchbrüchen im Träger angeordnet sein, wie auch Kombinationen beider Maßnahmen möglich sind.

In weiterhin vorteilhafter Ausführung weist der Formraum zum Spritzgießen des Trägers mit den Durchbrüchen Formelemente zum Ausbilden von die Durchbrüche ein- oder beidseitig verlängernden Kragen zum Ausbilden von längeren Durchbrüchen, oder zum Ausbilden von Einlauf- und/oder Auslaufschrägen an den Durchbrüchen auf. Diese Maßnahmen dienen in erster Linie dazu, für eine Strömungsführung zu sorgen, die zu der gewünschten, molekularen Längsorientierung führt. Sie erhöhen ferner, insbesondere bei dünnen Trägern, die Länge der Bandagierung der Borsten im Träger.

Ferner können die Durchbrüche und die Formkanäle längs- und/oder querprofiliert sein, wobei die Längsprofilierung zur Erzeugung entsprechend profilierter Borsten, aber auch zur Begünstigung der Scherströmung dienen, während die Querprofilierung der Durchbrüche zur besseren Einbindung der Borstenwurzel und die Querprofilierung der Formkanäle zur Ausbildung entsprechend profilierter Borsten bestimmt sind.

Die Formkanäle weisen vorzugsweise einen sich zum Ende kontinuierlich verengenden Querschnitt auf, um der Borste einen über die Länge unterschiedlichen Biegewinkel zu verleihen. Ferner unterstützt diese Maßnahme das Entformen der Borsten.

Die Formkanäle können sich zum Ende hin kontinuierlich oder auch in Stufen verengen, wobei jede Stufe zum Aufbau einer Dehnströmung führt, welche die molekulare Orientierung unterstützt. An der fertigen Borste entsteht eine Stufenkontur.

Es kann ferner auf verschiedene Weise, z.B. an einer mehrteiligen Spritzgießform oder an einer mit ihr zusammenwirkenden weiteren Spritzgießform eine weitere Formkavität vorgesehen oder freilegbar sein, die mit dem Träger einen Formraum zum Aufspritzen eines Bürstenkörpers und gegebenenfalls eines Griffs oder einer Handhabe bildet, so daß die komplette Borstenware in einem Mehrkomponentenspritzguß herstellbar ist.

In besonders bevorzugter Ausführung besteht das die Formkanäle aufweisende Teil der Spritzgießform aus parallel geschichteten Platten, wobei einander benachbarte Platten jeweils einen Formkanal oder eine Reihe von Formkanälen bilden und die Platten zum Entformen der Borsten voneinander abrückbar sind.

Da sehr dünne und lange Borsten entsprechende Formkanäle mit sehr kleinem Querschnitt und großer Länge erfordern und sich diese nicht mehr in herkömmlicher Weise durch Bohren, Erodieren, oder dergleichen herstellen lassen, wird durch den Schichtaufbau der Spritzgießform in jeder Formplatte nur ein Teil des Formkanals ausgebildet. Die Formgebung dieser offenen Kanäle ist durch die in der Metallbearbeitung bekannten Verfahren, wie Formschleifen, elektroerosives Abtragen, Lasern oder dergleichen, problemlos möglich. Die offenen Kanäle zweier benachbarter Formplatten ergänzen sich dann zu dem vollständigen Formkanal. Der schichtweise Aufbau erlaubt es - von einer Seite der Spritzgießform beginnend - die einzelnen Formplatten geringfügig voneinander abzurücken, um das Entformen der Borsten zu erleichtern. Dabei reicht ein Abrückweg von nur einigen µm aus.

In einer weiterhin bevorzugten Ausführung ist vorgesehen, daß das die Formkanäle aufweisende Teil der Spritzgießform aus quer zu den Formkanälen geschichteten Platten besteht, die in Richtung der Formkanäle und/oder quer dazu einzeln oder in Gruppen verfahrbar sind.

Diese Ausführung hat zunächst den großen Vorteil, daß die Formkanäle in den Trennebenen der Platten entlüftet werden können, so daß die mit hoher Spritzgießgeschwindigkeit eindringende Schmelze die im Formkanal enthaltene Luft an mehreren Stellen problemlos verdrängen kann, ohne daß am Ende des Formkanals gesonderte Entlüftungsöffnungen, welche die Endenausbildung an der Borste beeinflussen würden, notwendig sind. Die Ausbildung hat den weiteren vorteil, daß das Entformen über die Länge der Borste sukzessive durch Wegfahren der Platten - beginnend mit der das Ende des Formkanals aufweisenden Platte - möglich ist, so daß die beim Entformen auf die Borste wirkenden Kräfte reduziert werden und zugleich lokalisiert bleiben.

Dieser schichtweise Aufbau der Platten und deren Verfahrbarkeit kann ferner beim Verstrecken der gespritzten Borsten genutzt werden, um ein stufenweises, gegebenenfalls auch nur auf bestimmte Bereiche der Borste beschränktes Verstrecken zu ermöglichen.

Durch Querverschieben der Platten können die Borsten gebogen und dadurch oberflächennah gedehnt werden. Durch mehrere Biegewechsel wird in den Borsten eine Dehnungsreserve aufgebaut, die das Biegeverhalten und Wiederaufrichtvermögen (bend-recovery) verbessert. Ferner kann das Querverschieben, insbesondere der die Enden der Formkanäle aufweisenden Platte zum Abschneiden der Borsten dienen.

Der schichtweise Aufbau ermöglicht ferner den Austausch einzelner Platten, insbesondere der das Ende des Formkanals bildenden Platte, indem diese gegen eine Platte mit einer anderen Formkavität am Ende des Formkanals ausgetauscht wird, um die Endenausbildung der Borsten zu variieren. Diese Endplatte kann insbesondere auch die Formkavität zur Bildung der Widerlager an den Borsten für das Verstrecken aufweisen. Auch die anderen Platten können austauschbar sein, um die Formgebung der Borsten abschnittsweise zu variieren.

Um das Entformen profilierter Borstenenden zu ermöglichen, besteht zumindest die das Ende des Formkanals bildende Platte aus parallel geschichteten Segmenten und bilden benachbarte Segmente je einen Formkanal oder eine Reihe von Formkanälen, wobei die Segmente zum Entformen der Borstenenden voneinander abrückbar sind.

Gemäß einem weiteren Ausführungsbeispiel ist vorgesehen, daß die Spritzgießform mit den Formkanälen zumindest teilweise aus konzentrischen Formelementen besteht, die an ihrem einander zugekehrten Umfang Formkanäle in entsprechend konzentrischer Anordnung bilden. Auf diese Weise lassen sich die Borsten in Bendelform oder dergleichen anordnen und kann diese Anordnung nur in Teilbereichen des Borstenbesatzes vorgesehen sein.

Das erfindungsgemäße Verfahren und die Vorrichtung erlauben erstmals eine uneingeschränkte vollautomatische Fertigung. Halbfabrikate werden vollständig und Fertigfabrikate ganz überwiegend nicht mehr in Vorrat gehalten. Ausgehend von auf Lager gehaltenen Rohmaterialien (Kunststoffgranulaten, Farben und anderen Zuschlagstoffen) werden die Träger und Borstenmaterialien einer vorzugsweise Mehr-Komponenten-Spritzgießmaschine zugeführt. Borsten werden nicht mehr separat gefertigt, sondern innerhalb der Spritzgießmaschine, z.B. in einem zweiten Arbeitsschritt. Das Anlagensteuerungssystem kann einen automatischen Werkzeugwechsel zum Wechseln von Werkzeugteilen oder ganzer Werkzeuge beinhalten. Es kann praktisch nach Auftragseingang produziert werden, also "just in time" und damit auch "just in time" geliefert werden.

Die Erfindung betrifft schließlich eine Borstenware mit einem Träger und daran angeordneten, aus einem thermoplastischen oder thermoelastischen Kunststoff spritzgegossenen Borsten, die sich dadurch auszeichnet, daß der Träger mindestens einen Durchbruch aufweist, der auf wenigstens einem Teil seiner Höhe eine kleinste weite von ≤3mm aufweist, und daß jeder Durchbruch eine durchgespritzte Borste aufnimmt, deren maximale Ausdebnung quer zu ihrer Achse ≤3mm ist und wobei das Verhältnis dieser Ausdehnung zu einer Länge der Borste ≤1:5, vorzugsweise ≤1:10 bis 1:250 ist. Der Querschnitt der Borste entspricht mit Vorteil dem Querschnitt der Durchbrüche, kann aber auch kleiner als dieser sein.

Es kann ferner wenigstens ein Teil der Borsten hohl ausgebildet und können diese Borsten an ihrem freien Ende offen oder geschlossen sein. Sie können auch eine sie ausfüllende Kernborste umgeben, die vorzugsweise aus einem anderen Kunststoff besteht.

Ferner kann die Hohlborste perforiert sein und die von ihr umgebene Kernborste die Perforation unter Bildung von Vorsprüngen an der Außenseite der Borsten durchgreifen, um warzenartig Vorsprünge aus weicherem oder härterem Material zu bilden.

In einem weiteren Ausführungsbeispiel weist zumindest ein Teil der Borsten fingerartige Fortsätze auf, die bei einer einstückigen Borste unmittelbar angeformt oder bei einer Hohlborste durch Durchspritzen des Materials der Kernborste durch eine entsprechende Perforation erhalten werden.

Mit Vorteil weist wenigstens ein Teil der Borsten einen mit Partikeln und/oder Fasern gefüllten Kunststoff auf. Während Fasern in erster Linie zur Fremdverstärkung der durch molekulare Längsorientierung eigenverstärkten Borsten dienen, können partikel förmige Füllstoffe unter unterschiedlichen Zweckbestimmungen ausgewählt sein, z.B. zur Entfaltung einer abrasiven oder polierenden Wirkung der Borstenoberfläche. Die Partikel können aber auch Farbpigmente, Wirkstoffkomponenten oder dergleichen sein, wobei insbesondere Partikel mit hygienischer oder therapeutischer Wirkung in Frage kommen, die ihre Wirkung beispielsweise unter Zutritt von Feuchtigkeit entwickeln.

Gemäß einem weiteren Ausführungsbeispiel kann zumindest ein Teil der Borsten im wesentlichen achsparallel verlaufende, die sekundären Bindungskräfte quer zur Molekularorientierung reduzierende Strukturen aufweisen, die unter willkürlichem mechanischem Druck oder bei Benutzung der Borstenware dazu führen, daß sich die Borsten entlang der Strukturen zu Flaggen, Fingern oder dergleichen desintegrieren.

Es kann ferner zumindest ein Teil der Borsten aus einem energieleitenden Kunststoff bestehen, um elektrische oder magnetische Felder am Borstenmantel, insbesondere bei Gebrauch, auszubilden. Die Borsten können ferner - vorzugsweise nur in ihrem Kernbereich - aus einem transparenten, lichtleitenden Kunststoff bestehen. Durch Einkopplung von Licht, insbesondere Laserlicht von der Rückseite läßt sich das Licht an die Borstenenden transportieren, um dort fotochemische Reaktionen oder dergleichen auszulösen.

Gemäß einer weiteren Ausführungsform der Erfindung weist der Träger wenigstens eine Vertiefung auf und geht von jeder Vertiefung wenigstens ein Durchbruch aus und ist schließlich die Vertiefung mit dem Kunststoff der Borsten gefüllt.

Es kann sich um eine einzige vollflächige Vertiefung oder aber um rasterartige Vertiefungen in Form von Streifen oder Gittern handeln, die beim Spritzgießen der Borsten mit dem Borstenmaterial gefüllt werden und von denen aus die Schmelze durch die Durchbrüche hindurch gespritzt ist, so daß leisten- oder gitterförmige Tragstrukturen für die Borsten auf der Rückseite des Trägers entstehen, die je nach Anordnung und Geometrie steif bis flexibel sein können.

Der Träger und/oder die Borsten können aus verschiedenen Kunststoffen bestehen, die auf das unterschiedliche Anforderungsprofil von Träger und Borsten abgestimmt sind.

Der Träger kann auch zumindest in Teilbereichen mehrschichtig ausgebildet sein und insbesondere mindestens teilweise aus einem flexiblen und/oder gummielastischen Kunststoff bestehen, um eine Anpassung an die zu bürstende Oberfläche zu ermöglichen.

Da Borsten und Träger spaltenfrei miteinander verbunden sind, genügt die Borstenware höchsten HygieneAnforderungen, denen zusätzlich noch dadurch Rechnung getragen werden kann, daß Borsten und/oder Träger aus antimikrobiell ausgerüsteten Kunststoffen bestehen.

Nachstehend ist die Erfindung anhand einiger in der Zeichnung gezeigter Ausführungsbeispiele beschrieben, wobei Fig.1 bis 4 eine Gegenüberstellung zum Stand der Technik wiedergibt. In der Zeichnung zeigen:
- Fig.1: einen Teilschnitt einer in bekannter Weise einstükkig gespritzten Einheit aus Träger und Borsten;
- Fig.2: eine vergrößerte Ansicht des Details II in Fig.1;
- Fig.3: ein der Fig.1 entsprechender Teilschnitt einer erfindungsgemäß hergestellten Borstenware in einer ersten Ausführungsform;
- Fig.4: eine vergrößerte Ansicht des Details IV in Fig.3;
- Fig.5: einen Längsschnitt eines Borstenträgers vor dem Anbringen der Borsten;
- Fig.6: eine vergrößerte Ansicht des Details VI in Fig.5 nach dem Spritzen der Borsten;
- Fig.7: einen Längsschnitt eines Ausführungsbeispiels in Form eines Besens;
- Fig.8: einen der Fig.7 entsprechenden Längsschnitt eines anderen Ausführungsbeispiels;
- Fig.9: einen Teilschnitt einer zylindrischen Bürste;
- Fig.10: eine vergrößerte Ansicht des Details X in Fig.9;
- Fig.11: einen Teilschnitt eines Bürstenkopfs;
- Fig.12: eine teilweise geschnittene Ansicht eines Flachpinsels;
- Fig.13: eine schematische Draufsicht eines Borstenbesatzes einer rechteckigen Bürste;
- Fig.14: einen Schnitt XIV-XIV gemäß Fig.13
- Fig.15: eine vergrößerte Ansicht des Details XV in Fig.14
- Fig.16 bis 19: je einen Teilschnitt eines Trägers mit verschiedenen Geometrien der Durchbrüche;
- Fig.20: eine Draufsicht eines Borstenbesatzes eines Zahnbürstenkopfs;
- Fig.21: einen Längsschnitt XXI-XXI des Zahnbürstenkopfs gemäß Fig.20;
- Fig.22: eine Draufsicht einer anderen Ausführung des Borstenbesatzes eines Zahnbürstenkopfs;
- Fig.23: einen Längsschnitt des Zahnbürstenkopfs gemäß Fig.22;
- Fig.24: eine vergrößerte Ansicht des Details XXIV in Fig.23 vor dem Durchspritzen der Borsten;
- Fig.25 bis 29: je einen Teilschnitt eines Trägers mit dürchgespritzter Borste mit verschiedner Ausführung der Durchbrüche;
- Fig.30: einen Teilschnitt eines Trägers mit verschiedener Ausbildung der Borsten;
- Fig.31: einen Teilschnitt eines Trägers mit durchgespritzter Hohlborste
- Fig.32: einen Teilschnitt entsprechend Fig.31 mit einer anderen Ausführungsform der Hohlborste;
- Fig.33: eine schematische Ansicht der Anspritzseite einer Spritzgießform mit den Formkanälen in verschiedener Ausführung;
- Fig.34: einen Teilschnitt XXXIV-XXXIV gemäß Fig.33;
- Fig.35: eine schematische perspektivische Ansicht eines Teils der Spritzgießform gemäß Fig.33 ;
- Fig.36: einen Schnitt eines mehrteiligen Spritzgießaggregates in der Spritzphase;
- Fig.37: eine vergrößerte Ansicht des Details XXXVII gemäß Fig.37;
- Fig.38: das Spritzgießaggregat gemäß Fig.36 nach der Spritzphase und während des Verstreckens der Borsten;
- Fig.39: eine vergrößerte Ansicht des Details XXXIX gemäß Fig.38;
- Fig.40: einen Schnitt einer Spritzgießform mit den Formkanälen in jeder Spritzphase;
- Fig.41: die Spritzgießform gemäß Fig.40 beim Entformen;
- Fig.42: die Spritzgießform gemäß Fig.40 beim stufenweisen Entformen;
- Fig.43: eine andere Ausführungsform der Spritzgießform gemäß Fig.40 in der Spritzphase;
- Fig.44: die Spritzgießform gemäß Fig.43 in einer ersten Phase des Entformens;
- Fig.45: die Spritzgießform gemäß Fig.43 in einer weiteren Phase des Entformens;
- Fig.46: ein weiteres Ausführungsbeispiel einer Spritzgießform in der Spritzphase;
- Fig.47: die Spritzgießform gemäß Fig.46 während des Verstreckens der Borsten;
- Fig.48: ein weiteres Ausführungsbeispiel einer Spritzgießform mit den Formkanälen in der Spritzphase;
- Fig.49: die Spritzgießform gemäß Fig.48 beim Verstrecken der Borsten;
- Fig.50: einen Teilschnitt eines Trägers mit durchgespritzten Borsten;
- Fig.51: einen Teilschnitt eines Trägers mit durchgespritzten Borsten;
- Fig.52: einen Längsschnitt einer Zweikomponentenborste;
- Fig.53: einen der Fig.52 entsprechenden Längsschnitt einer Zweikomponentenborste in einer anderen Ausführung;
- Fig.54: eine dritte Ausführungsform einer Zweikomponentenborste;
- Fig.55 bis 58: verschiedene Ausführungsbeispiele von Formelementen einer Spritzgießform im Schnitt;
- Fig.59 bis 62: je einen Teillängsschnitt der Formelemente gemäß Fig.55 bis 58;
- Fig.63 bis 68: verschiedene Querschnitte anderer Ausführungsbeispiele von Mehrkomponentenborsten und
- Fig.69: einen Querschnitt einer spaltbaren Borste.

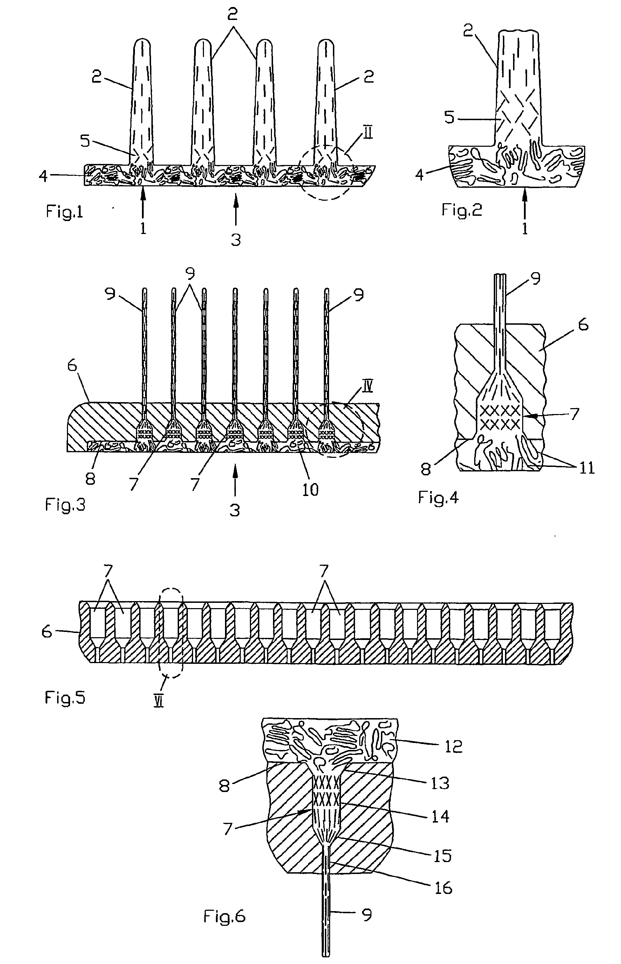

In Fig.1 und 2 sind Teilschnitte einer Borstenware wiedergegeben, z.B. ein Ausschnitt im Bereich des Kopfs einer Zahnbürste, die in herkömmlicher Weise einteilig durch Spritzgießen hergestellt wird (z.B. US 5 926 900). Sie besteht aus einem Träger 1 und parallelen borstenartigen Arbeitselementen in Form von "bolts" oder "pins", die vom Träger zu ihrem freien Ende konisch zulaufen. Träger und Arbeitselemente werden in einer Spritzgießform hergestellt, die eine der fertigen Borstenware entsprechende Kavität aufweist. Beim Zuführen der Kunststoff-Schmelze gemäß Pfeil 3 werden zunächst derjenige Teil der Kavität, der den Träger abbildet, und anschließend die Formkanäle für die Arbeitselemente 2 gefüllt. Es entstehen Arbeitselemente mit großem Durchmesser und einem relativ großen Verhältnis Durchmesser/Länge. In der Schmelze liegen die Polymermoleküle in ungeordneter, knäuelartiger Struktur vor, die im Bereich des Trägers 4 im wesentlichen erhalten bleibt. Beim Eintritt in die Formkanäle für die Arbeitselemente 2 findet aufgrund der Querschnittsreduzierung eine gewisse Längsorientierung der Molekülketten statt, wie dies im Übergangsbereich 5 angedeutet ist. Auf dem weiteren Schmelzeweg ergibt sich durch die Wandreibung eine Scherströmung, die zumindest im äußeren, oberflächennahen Bereich des bolzenartigen Arbeitselementes zu einer gewissen Molekularorientierung führt. Das Ausmaß der Längsorientierung ist maßgeblich für die Biegeelastizität und Biegewechselfestigkeit und das Wiederaufrichtvermögen des Reinigungselementes. Wie in Fig.2 erkennbar, weist das Arbeitselement 2 am Übergang 5 zum Träger 4 seine größte Schwachstelle auf, da hier die Molekularorientierung noch völlig unzureichend ist und sich auch auf der weiteren Länge im wesentlichen nur oberflächennah ausbildet.

Bei dem erfindungsgemäßen Verfahren gemäß Fig.3 und 4 wird zunächst ein Träger 6 gebildet und bei seiner Bildung Durchbrüche 7 nach Art von Spinndüsen geformt. Sie können in ihrer Idealform den in der Spinntechnik verwendeten Düsenformen entsprechen, können in ihrer Geometrie aber auch einfacher gestaltet sein, wobei im Vordergrund die Aufgabe steht, eine Eigenverstärkung durch molekulare Längsorientierung schon in den Durchbrüchen zu erzielen, wie dies beim Spinnprozeß der Fall ist.

Beim gezeigten Ausführungsbeispiel weist der Träger 6 auf seiner Rückseite eine Vertiefung 8 auf, von der die Durchbrüche 7 ausgehen. Die Kunststoff-Schmelze für die Borsten 9 wird von der mit dem Richtungspfeil 3 angedeuteten Anspritzseite in die Vertiefung 8 eingespritzt und zugleich durch die Durchbrüche 7 hindurch in nicht gezeigte Formkanäle einer Spritzgießform, die später beschrieben wird, gespritzt. Die Borsten 9 sind stoffschlüssig mit dem die Vertiefung 8 ausfüllenden Kunststoff 10 verbunden, wie dies insbesondere aus Fig.4 ersichtlich ist. Durch die Ausbildung der Durchbrüche ähnlich einer Spinndüse werden die nicht orientierten Moleküle 11 zunächst beim Eintritt in den Durchbruch 7 vororientiert und auf dem weiteren Weg der Schmelze bis zum Austritt aus dem Träger 6 praktisch vollständig in Längsrichtung der Borste 9 gestreckt. Die damit verbundene Eigenverstärkung (durch Molekularorientierung) verleiht der Borste 9 Eigenschaften, wie sie ähnlich nur von extrudierten bzw. gesponnenen Monofilen bekannt sind.

In Fig.5 ist der Träger 6 vollständig wiedergegeben. Er kann den Körper einer Bürste oder zumindest eines Teils derselben bilden und zu diesem Zweck eine entsprechende Randausbildung aufweisen. Er ist mit einer dem fertigen Borstenbesatz der Bürste entsprechenden Anzahl von Durchbrüchen 7 versehen, die jeweils zur Ausbildung einer Borste bestimmt sind. Die Durchbrüche sind nach Art einer Spinndüse ausgebildet, wie sie im Idealfall in Fig.6 wiedergegeben ist. In der Terminologie der Spinntechnik bildet die Kunststoff-Schmelze in der Vertiefung 8 das sogenannten Schmelzpolster 12, an das sich der Einführtrichter in Form eines sich konisch verändernden Abschnittes 13 anschließt. An diesen wiederum schließt die Leitstrecke 14 (auch Scherzone genannt) mit zylindrischem Querschnitt an, die über eine konische Übergangszone 15 in die sogenannte Bügelstrecke 16 mit reduziertem Querschnitt übergeht. Das Verhältnis von Durchmesser zu Länge der Bügelstrecke beträgt zwischen 1:1 und 1:6. Mit dieser Ausbildung des Durchbruchs 7 wird eine optimale Streckung und Längsorientierung der Moleküle in der Borste 9 erreicht.

Um eine borstenartige Struktur zu erhalten, sollte die kleinste Weite der Durchbrüche 7, z.B. auf der Bügelstrekke 16, ≤3mm betragen. Ferner sollte das Verhältnis von Länge der Borste zum kleinsten Querschnitt des Durchbruchs 7 ≤1:5, vorzugsweise aber ≤1:10 sein, wobei dieses Verhältnis bis in den Bereich von 1:250 reichen kann. Praktische Versuche haben gezeigt, daß ein Durchbruch, der im wesentlichen nur der Bügelstrecke 16 mit einem sich auf deren Durchmesser verengenden Einführbereich und einem Verhältnis von 1:4 (Durchmesser zu Länge) entspricht zu einer solchen Erhöhung der Einspritzgeschwindigkeit und der Wandreibung der Schmelzeströmung führt, daß eine ausgezeichnete Eigenverstärkung der Borste erreicht wird. Ein großes Verhältnis Durchmesser zu Länge von z.B. 1:1 ermöglicht die Verwendung dünner, insbesondere flexibler Träger.

Bei einer Ausbildung des Durchbruch 7 gemäß Fig.6 wird bei einem Eingangsdurchmesser am Einführtrichter von 8,5mm und einem Durchmesser von 0,5mm der Bügelstrecke die Strömungsgeschwindigkeit der Schmelze auf das 28,5-fache erhöht. Je höher die Geschwindigkeit ist, umso steiler ist das Geschwindigkeitsprofil und umso ausgeprägter sind die Scherkräfte, die durch die konischen Übergänge noch verstärkt werden.

Das Schmelzepolster 12 gemäß Fig.6 dient beim üblichen Spinnen von Fasern als Schmelzevorrat. Im Zusammenhang mit der Erfindung bildet es während des Spritzens der Borsten 9 gleichfalls einen Schmelzevorrat mit zusätzlicher Verteilerfunktion. Weiterhin wird bei dem für das Spritzgießen üblichen Nachdruck Schmelze in die Durchbrüche 7 und die daran anschließenden Formkanäle nachgeschoben, um eine vollkommene Formfüllung zu erhalten. Ferner bildet dieses Schmelzepolster nach dem Spritzgießen ein konstruktives Teil der fertigen Borstenware, in der die Borsten 9 stoffschlüssig "verankert" sind und das ferner mit dem Träger, wie in Fig.3 gezeigt, eine Schichtkonstruktion bildet. Stattdessen kann die Vertiefung 8 am Träger 6 auch so aufgeteilt sein, daß parallele Stege oder Gitter gebildet werden, an die die Borsten 9 angebunden sind, im Falle eines Gitters von dessen Kreuzungspunkten.

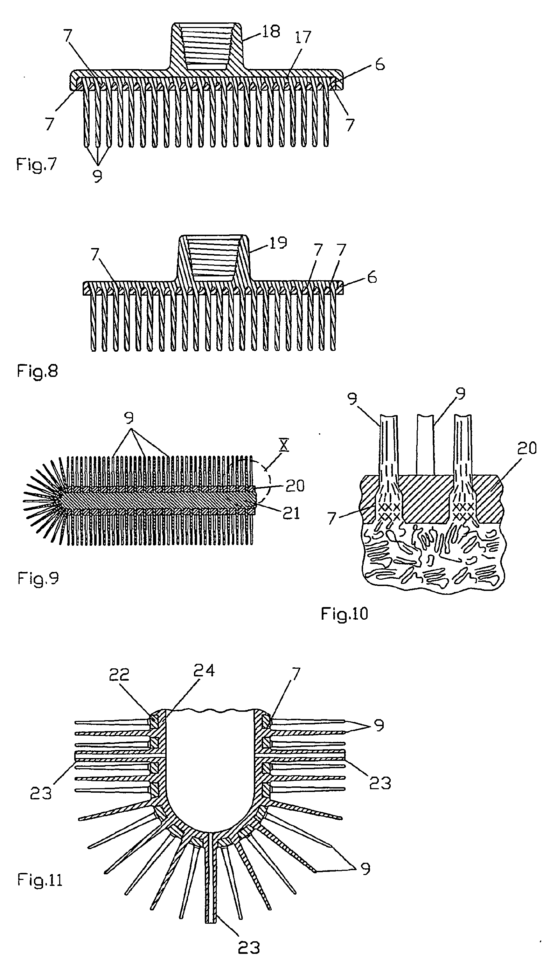

Fig.7 zeigt ein Ausführungsbeispiel eines Besens in schematisierter Darstellung, bei dem der Träger 6 ähnlich wie in Fig.3 und 5 im wesentlichen plattenförmig ausgebildet und mit den Durchbrüchen 7 versehen ist, durch die die Borsten 9 hindurchgespritzt sind. Der Träger 6 ist rückseitig mit dem Kunststoff der Borsten 9 aufgefüllt und entweder mechanisch oder wiederum spritzgießtechnisch mit dem Besenkörper 17 verbunden, der den Träger 6 randseitig umgreift und mittig ein Stielgehäuse 18 für einen Besenstil aufweist. Das Ausführungsbeispiel gemäß Fig.8 entspricht im wesentlichen dem der Fig.7, jedoch besteht das Stielgehäuse 19 aus dem gleichen Kunststoff wie die Borsten 9 und ist mit diesen einstückig gespritzt.

Fig.9 zeigt ein Teil einer Wimpernbürste (Mascarabürste), bei der der Träger 20 im wesentlichen rohrförmig ausgebildet und an seinem einen Ende kalottenförmig geschlossen ist. Der rohrförmige Träger 20 weist eng stehende Durchbrüche 21 nach Art von Spinndüsen auf (Fig.10). Die Schmelze für die Borsten wird in den rohrförmigen Träger 20 eingespritzt und dringt durch die Durchbrechungen 21 in nicht gezeigte Formkanäle einer Spritzgießform ein, wobei in diesem Fall eng stehende dünne Borsten 9 gebildet werden. In diesem Fall wird der rohrförmige Träger mit der Kunststoff-Schmelze vollständig ausgefüllt, so daß ein zylindrischer Kern 21 entsteht, der den rohrförmigen Träger 20 versteift. Der Träger 20 und/oder der Kern 21 können an der in Fig.9 rechten Seite zugleich einen Handgriff bilden.

Beim Ausführungsbeispiel gemäß Fig.11 ist der Träger 22 ein kurzer Zylinder mit einem kalottenförmigen Abschluß, der die im wesentlichen radial verlaufenden Durchbrüche 7 aufweist. Die Durchbrüche weisen ein Verhältnis Durchmesser/Länge im Bereich von 1:1 auf. Auch hier wird die Kunststoff-Schmelze für die Borsten 9 von innen her zugeführt und dringt durch die Durchbrüche 7 unter Bildung der Borsten 9 nach außen. Dabei können einzelne Borsten 23 auch hohl ausgeführt sein, um beispielsweise ein flüssiges Medium zu leiten. In diesem Fall sind an der nicht gezeigten Spritzgießform zwischen den Formkanälen für die Borsten 9 verfahrbare Stifte angeordnet, die den Hohlraum der Borsten 23 abbilden und nach dem Spritzen der Borsten 9 gezogen werden. Mittels weiterer Stifte können im Träger 22 auch Löcher zwischen den Borsten gebildet werden, um ein Medium zwischen den Borsten abzugeben. Der von der Kunststoff-Schmelze an der Innenseite des Trägers 22 gebildete Innenmantel 24 versteift den teilzylindrischen Träger 22. Sein Innenraum kann mit einem weiteren Kunststoff voll oder teilweise gefüllt werden. Die hierfür verwendete Kunststoff-Schmelze kann gegebenenfalls auch zur Füllung der Hohlborsten 23 dienen und gegebenenfalls auch durch diese hindurchgespritzt werden, um an der Mündung der Hohlborste 23 auszutreten und einen Borstenfortsatz aus anderem Material zu bilden. Die Ausführungsform gemäß Fig.11 eignet sich beispielsweise für WC-Bürsten. In ähnlicher Weise können auch kugelförmige Bürsten mit nur einer Anspritzstelle am kugelförmigen Träger hergestellt werden.

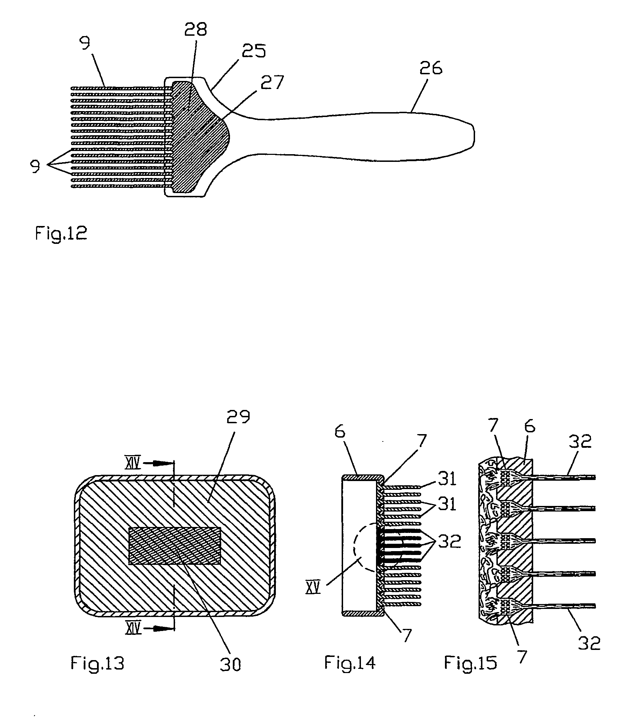

Fig.12 zeigt schematisch einen Flachpinsel mit einem Pinselgehäuse 25 und einem Griff 26, die beispielsweise im Spritzgieß- oder Blasverfahren einstückig hergestellt sind. Das Gehäuse 25 weist an seiner Stirnseite wiederum Durchbrüche auf, die von einem Hohlraum 27 ausgehen und nach Art von Spinndüsen ausgebildet sind. In den Hohlraum 27 wird über ein oder zwei Anspritzpunkte die Kunststoff-Schmelze für die Pinselborsten 9 eingespritzt. Die Schmelze dringt durch die Durchbrüche 7 in die nicht gezeigten Formkanäle einer Spritzgießform unter Abbilden der Borsten 9 ein. Zugleich bildet diese Kunststoff-Schmelze einen den Hohlraum 27 ausfüllenden Kern 28, der das Gehäuse 25 aussteift und einen Griffbereich bildet. Insbesondere bei einem blasgeformten Pinselkörper ist diese Aussteifung von Bedeutung.

Fig.13 zeigt eine im wesentlichen rechteckige Handbürste oder einen Aufsatz für eine solche. Es kann sich z.B. auch um den Kopf einer Malerbürste handeln. In diesem Fall ist der Träger 6 als einseitig offener Rahmen mit Durchbrüchen 7 an der geschlossenen Seite vorgefertigt. Der Borstenbesatz besteht in diesem Fall aus einem äußeren Borstenfeld 29 und einem inneren Borstenfeld 30, die in Fig.13 der Einfachheit wegen schraffiert wiedergegeben sind. In einem ein- oder zweistufigen Spritzgießverfahren wird durch die Durchbrüche 7, die innerhalb des Borstenfeldes 29 liegen, eine erste Kunststoff-Schmelze und durch die Durchbrüche 7, die im zweiten Borstenfeld 30 liegen, eine andere Kunststoff-Schmelze durchgespritzt, um Borsten 31 bzw. 32 mit unterschiedlichen mechanischen und/oder physikalischen Eigenschaften zu erzeugen. So können die äußeren Borsten 31 einen größeren Durchmesser als die inneren Borsten 32, die in Fig.15 vergrößert gezeigt sind, aufweisen, sie können aber auch mit unterschiedlichen Füllstoffen oder Farben ausgestattet sein.

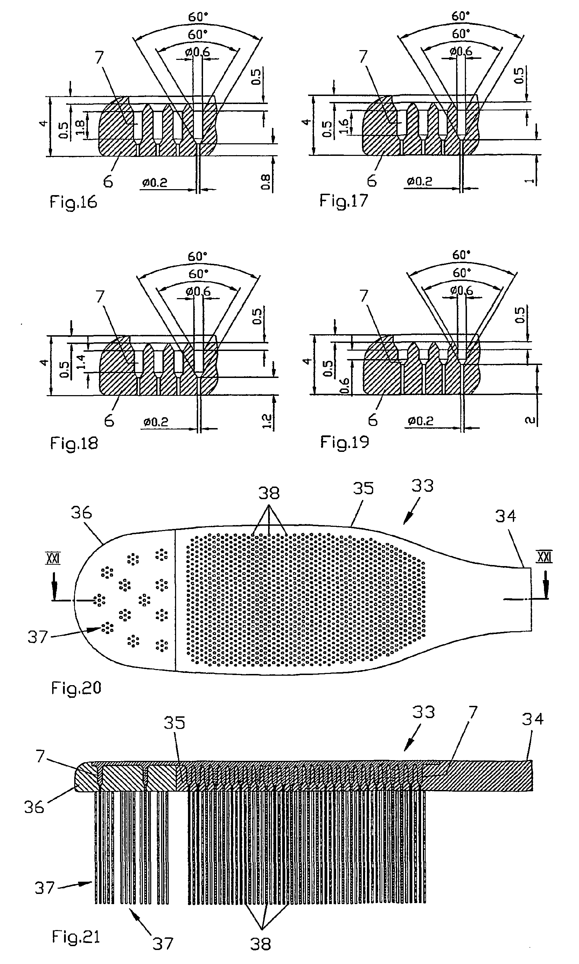

Fig.16 bis 19 zeigen verschiedene konstruktive Ausführungen des Trägers 6 mit den Durchbrüchen 7, wobei die Maße in Millimeter angegeben sind. Bei diesen Abmessungen wird ein besonders ausgeprägter spinndüsenartiger Effekt erreicht, wobei auf die im Zusammenhang mit Fig.6 verwendete Terminologie aus der Spinntechnik zurückgegriffen wird. Bei allen Ausführungsbeispielen gemäß Fig.16 bis 19 weisen der Einführtrichter und die Übergangszone einen Konuswinkel von 60° auf. Der Mündungsdurchmesser des Einführtrichters und der Einlaufdurchmesser der Übergangszone und damit der Durchmesser der Leitstrecke, die auch als Scherzone bezeichnet wird, beträgt jeweils 0,6mm. Das Schmelzepolster weist jeweils eine Dicke von 0,5mm auf und der Durchmesser der Bügelstrecke beträgt in allen vier Fällen 0,2mm. Die Durchbrüche 7 variieren jedoch in der Länge der Leitstrecke und der Länge der Bügelstrecke. Sie betragen in dieser Reihenfolge bei Fig.16 1,8 bzw. 0,88mm, bei Fig.17 1,6 bzw. 1,0mg, bei Fig.18 1,4 bzw. 1,2mm und bei Fig.19 0,6 bzw. 2,0mm. Insbesondere durch die Länge der Leitstrecke und der Bügelstrecke, wo eine starke Scherströmung aufgrund der Wandreibung vorliegt, findet die molekulare Längsorientierung der Schmelze statt.

Fig.20 und 21 zeigen einen Zahnbürstenkopf 33, der einstükkig mit dem nicht näher gezeigten Zahnbürstengriff 34 gespritzt sein kann. Der Zahnbürstenkopf 33 besteht aus einem griffnahen Teil 35 und einem hiervon abgegrenzten vorderen Teil 36, die beide den Träger für die Borsten bilden, wobei der vordere Teil 36 einem weicheren, z.B. gummielastischen Kunststoff gespritzt ist. An der Rückseite weisen die beiden Teile 35 und 36 wiederum eine Vertiefung auf, in die die Kunststoff-Schmelze für die Borsten eingespritzt wird.

Der Borstenbesatz besteht in dem vorderen Kopfteil 36 aus Bündeln 37, die jeweils aus einzelstehenden Borsten gebildet sind, und in seinem griffnahen Teil 35 aus eng stehenden Einzelborsten 38. Die den Träger bildenden Teile 35 und 36 des Bürstenkopfs weisen wiederum Durchbrüche 7 zum Ausformen der auf die gegebenenfalls vertiefte Rückseite der beiden Teile aufgespritzten Kunststoff-Schmelze auf. Auch hier können die die Bündel 37 bildenden Borsten und die eng stehenden Borsten 38 aus Kunststoffen unterschiedlicher Eigenschaft, Farbe oder dergleichen bestehen.

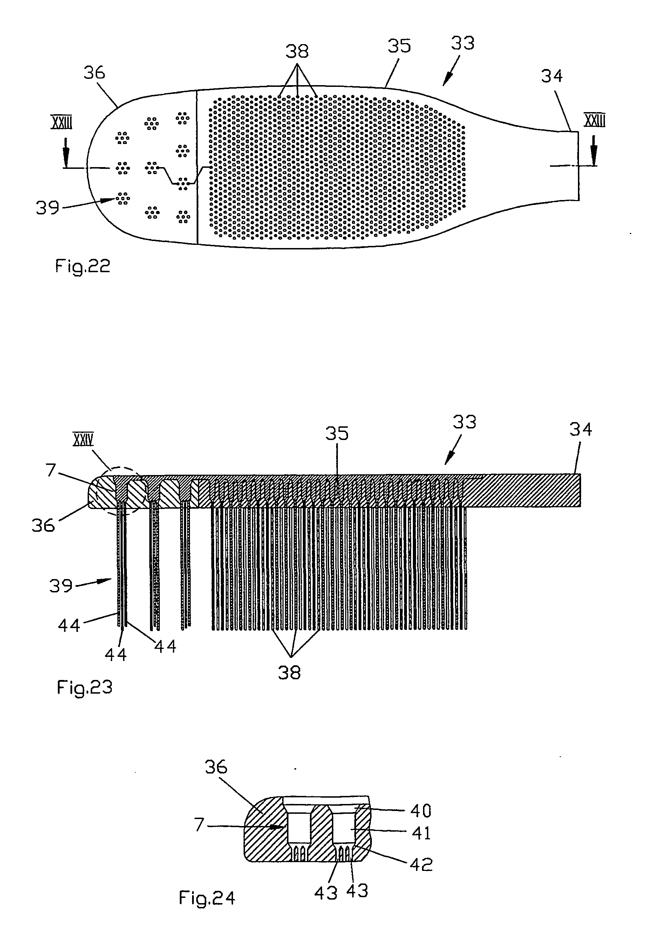

Fig.22 und 23 zeigt wiederum den Kopf einer Zahnbürste, der nur insoweit beschrieben wird, als der Aufbau von dem der Fig.20, 21 abweicht. In diesem Fall weist das vordere Teil 36 zwar gleichfalls Bündel 39 auf, jedoch sind die zu ihrer Erzeugung dienenden Durchbrüche 7 anders ausgebildet, indem ein einziger Durchbruch, wie Fig.23 zeigt, zur Formung eines Bündels genutzt wird. In Fig.24 ist der Querschnitt dieser Durchbrüche in vergrößertem Maßstab wiedergegeben. Sie weisen wiederum einen Einführtrichter 40, eine Leitstrecke 41 und eine Übergangszone 42 auf, die jedoch in mehrere nebeneinander liegende Bügelstrecken 43 übergeht. Die Anzahl der Bügelstrecken 43 entspricht der Anzahl der Borsten innerhalb des Bündels 39 (Fig.22 und 23). Die einzelnen Borsten 44 innerhalb des Bündels 39 können unterschiedlich lang sein, so daß die Enden auf einer geneigten oder gewölbten Hüllfläche liegen, wie dies in Fig.23 angedeutet ist. Die Enden sind exakt verrundet.

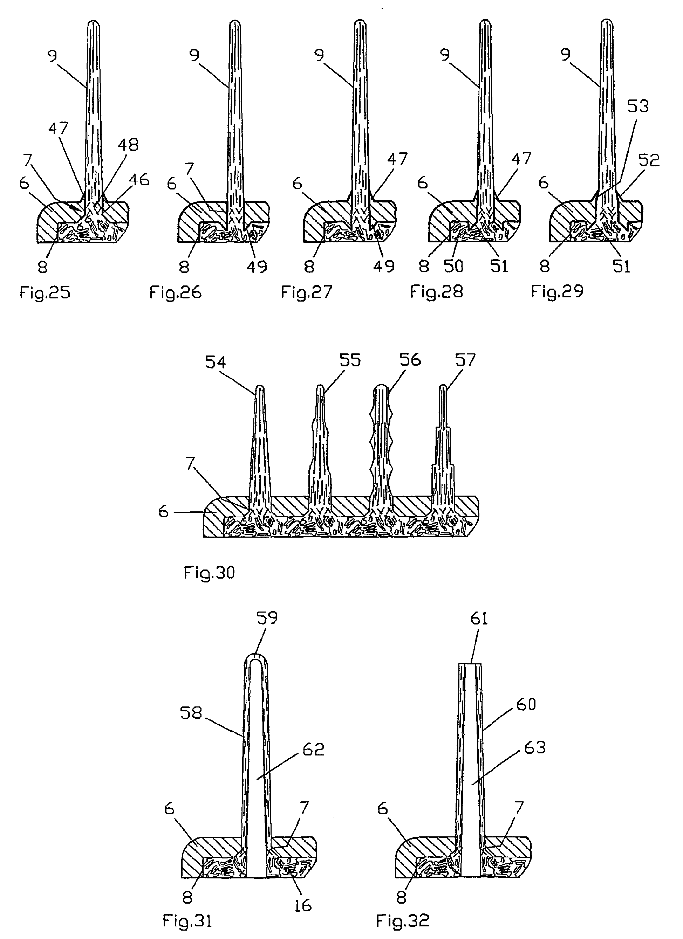

Bei den zuvor beschriebenen Ausführungsformen sind die Durchbrüche 7 in ihrer Form überwiegend den Verhältnissen bei einer Spinndüse angepaßt. Der Effekt der molekularen Orientierung läßt sich aber auch schon bei einfacherer Gestaltung des Querschnitts der Durchbrüche erzielen, wie sie in Fig.11, 25 bis 29 und 31 gezeigt sind. Gemäß Fig.25 weist der Träger 6 einen Durchbruch 7 auf, der an der Vertiefung 8 mit einem sich konisch verengenden Abschnitt 45 entsprechend dem Einführtrichter ansetzt, anschließend einen im wesentlichen zylindrischen, gegebenenfalls leicht konischen Abschnitt 46 aufweist, der sich in einem Kragen 47 an dem Träger 6 fortsetzt, so daß eine längere Scherzone entsteht. Zugleich wird der Bereich 48 der Borste 9, in der die Molekularorientierung noch nicht oder nur unzureichend stattgefunden hat, von dem Träger 6 mit dem Kragen 47 bandagiert. Die Ausführungsform nach Fig.26 unterscheidet sich im wesentlichen nur dadurch von Fig.25, daß der Träger 6 einen in die Vertiefung 8 hineinreichenden Kragen 49 aufweist, während Fig.27 einen äußeren und einen inneren Kragen 47 bzw. 49 zeigt und in Fig.28 der innere Kragen 50 zusätzlich einen Einführtrichter 51 besitzt. Schließlich ist die Ausführungsform nach Fig.29 gegenüber der nach Fig.28 dadurch abgewandelt, daß der Träger 6 einen äußeren Kragen 52 aufweist, der sich innenseitig verjüngt, so daß eine zusätzliche Einschnürung der Kunststoff-Schmelze erfolgt.

Fig.30 zeigt bei gleicher Formgebung der Durchbrüche 7 am Träger 6 verschiedene Ausführungen von Borsten, nämlich eine glattwandige, konisch zulaufende Borste 54, eine unregelmäßig längsprofilierte Borste 55, eine gleichmäßig längsprofilierte Borste 56 und eine sich stufenweise verjüngende Borste 57, die sich mit Spritzgießformen aus geschichteten Platten herstellen lassen, wie sie später beschrieben sind.

Fig.31 und 32 zeigen einen Träger 6 mit Durchbrüchen 7 und Vertiefungen 8, wie zuvor beschrieben, wobei die durchgespritzten Borsten als Hohlborsten 58 mit geschlossenem Ende 59 oder als Hohlborste 60 mit offenem Ende 61 ausgebildet sind. Der Hohlraum 62 bzw. 63 wird dadurch erhalten, daß an der Anspritzseite verfahrbare Formstifte (nicht gezeigt) angeordnet sind, die vor dem Spritzen der Borste durch die Durchbrüche und in nicht gezeigten Formkanäle eingefahren werden. Die in die Vertiefung 8 eingespritzte Kunststoff-Schmelze für die Borsten 58 bzw. 60 wird zwischen dem Formkanal und dem eingefahrenen Stift ringförmig durch die Durchbrüche 7 hindurchgespritzt, wobei aufgrund der Wandreibung und der erhöhten Schmelzegeschwindigkeit eine Längsorientierung an der Innenwand des Formkanals und an der Wandung des Formstiftes erfolgt, so daß eine Eigenverstärkung durch molekulare Längsorientierung über den gesamten Querschnitt und die Länge der Hohlborste gewährleistet ist.

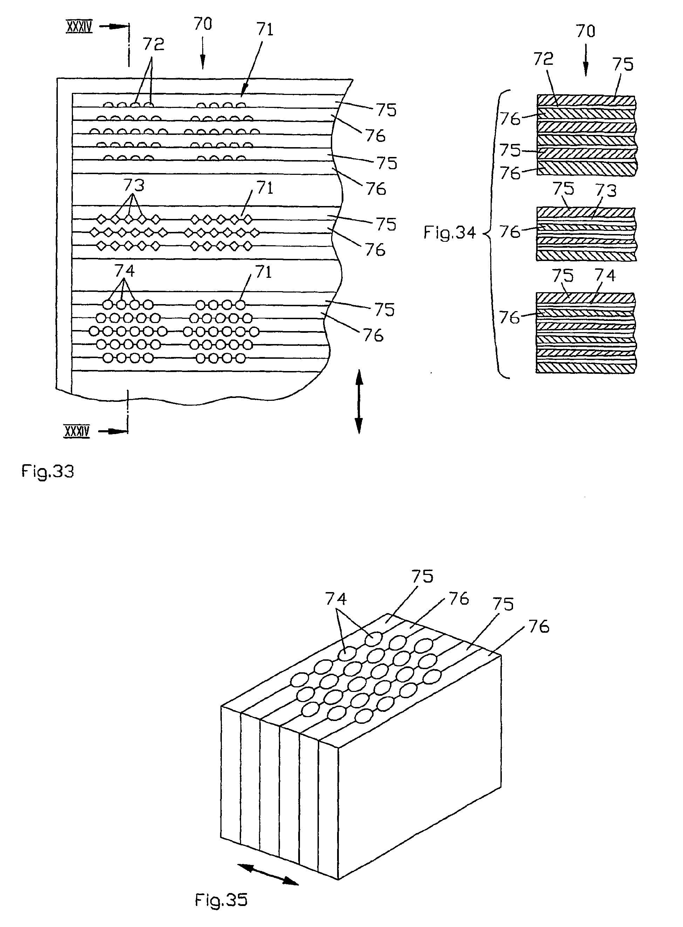

In Fig.33 bis 35 ist ein Teil 70 einer mehrteiligen Spritzgießform schematisch gezeigt, wobei dieses Teil die Formkanäle 71 für die Borsten aufweist, die jeweils entsprechend der Anordnung der Borsten im Borstenbesatz der fertigen Borstenware angeordnet sind. Im oberen Teil der Darstellung sind Formkanäle 72 mit halbkreisförmigem Querschnitt, im mittleren Teil Formkanäle 73 mit rechteckigem Querschnitt und im unteren Teil Formkanäle 74 mit kreisrundem Querschnitt wiedergegeben. Die Spritzgießform 70 besteht aus parallel zum Formkanal geschichteten Platten, von denen jeweils einander benachbarte Platten 75, 76 ein Teil eines jeden Formkanals bilden. Bei kleinen Querschnitten und großer Länge der Formkanäle 71, die ein Entformen in Richtung der Formkanäle erschweren, können die Platten 75, 76 in Richtung des Doppelpfeils geringfügig verfahren werden.

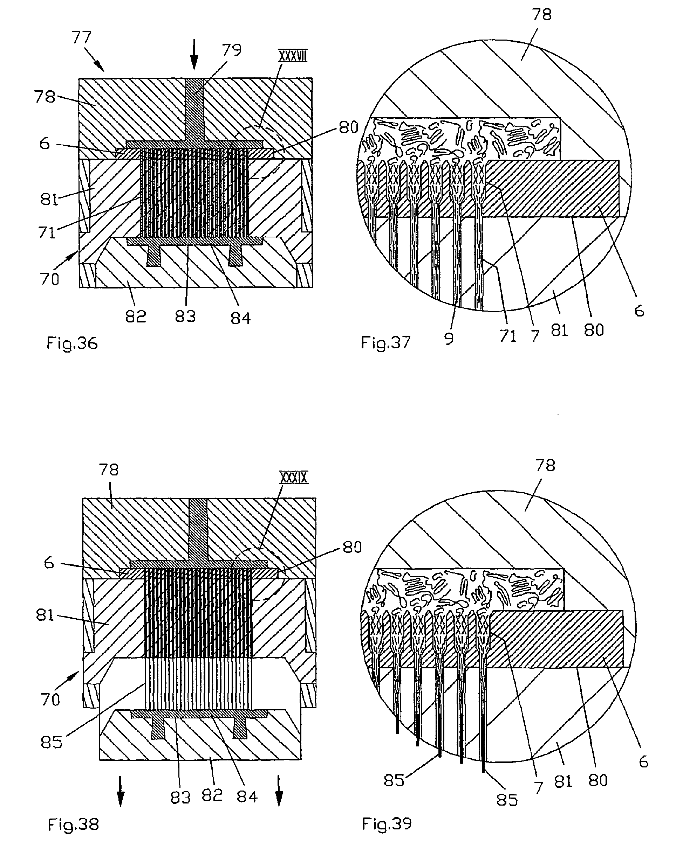

Fig.36 zeigt ein Spritzgießaggregat 77 mit einer mehrteiligen Spritzgießform, deren in der Regel ortsfestes Teil 78 einen Zuführkanal 79 für die Kunststoff-Schmelze der Borsten und einen Formraum 80 aufweist, in dem der vorgefertigte Träger 6 mit den Durchbrechungen eingelegt oder direkt durch Spritzen erzeugt wird. Das weitere verfahrbare Teil 81 weist die Formkanäle 71 für die Bildung der Borsten auf. Bei dem gezeigten Ausführungsbeispiel ist schließlich ein drittes Teil 82 mit einer Kavität 83 vorgesehen, in die die über den Zuführkanal 79 und durch die (nicht gezeigt) Durchbrüche des Trägers 6 in die Formkanäle 71 durchgespritzte Schmelze gelangt und diese Kavität ausfüllt, um ein plattenartiges Widerlager 84 zu bilden. Einzelheiten im Bereich der Formtrennebene zwischen den Teilen 78 und 81 des Spritzgießaggregates 77 sind in Fig.37 erkennbar. Nach dem Spritzgießen wird zunächst das Teil 82 mit dem plattenförmigen Widerlager 84, das die Enden der Borsten 9 verbindet, in Richtung der Pfeile weggefahren, so daß die Borsten 9 durch Längen verstreckt werden und auf diese Weise Borsten 85 mit noch ausgeprägterer Längsorientierung der Molekülketten erzeugt werden. Das Verstrecken kann je nach Kunststoff und geometrischer Abmessung der Formkanäle, also der erzeugten Borstengeometrie unmittelbar nach dem Spritzgießen oder nach einer gewissen Verweilzeit erfolgen.

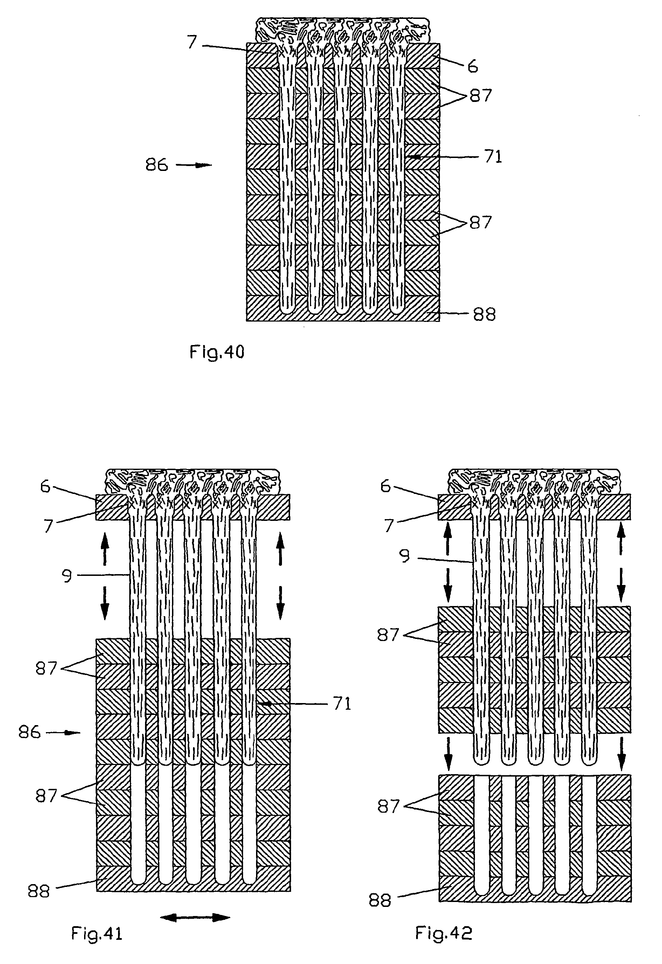

In den Fig.40 bis 49 ist eine Spritzgießform 86 mit den Formkanälen 71 gezeigt, die jedoch aus einzelnen quer zur Achse der Formkanäle 71 geschichteten Platten 87 und einer Endplatte 88 besteht, wobei die Platten 87 je einen Längenabschnitt des Formkanals 71 aufweisen, während die Endplatte 88 die Enden der Borsten formt. Die Kunststoff-Schmelze wird auch hier wieder durch die Durchbrüche 7 des Trägers 6 hindurch in die Formkanäle 71 gespritzt, bis sie die Endplatte 88 erreicht. In der Trennebene zwischen den Platten 87 kann - wie dies bei herkömmlichen Spritzgießformen in der Formtrennebene bekannt ist - die Entlüftung erfolgen. Die Platten 87 und 88 sind gegenüber dem Träger 6 bzw. dem ortsfesten Teil der Spritzgießform einzeln oder, wie in Fig.41 und 42 gezeigt, gruppenweise verfahrbar. Dies kann, wie Fig.41 zeigt, in einem Zug geschehen, vorzugsweise jedoch werden zunächst die Endplatte 88, gegebenenfalls mit den unmittelbar folgenden Platten 87 weggefahren und die Borsten 9 im Bereich ihrer Enden und anschließend in einer zweiten Stufen auf ihrer restlichen Länge entformt.

Die Platten 87, 88 können ferner, wie mit dem Doppelpfeil in Fig.41 angedeutet, quer zu den Formkanälen 71 oszillierend verschoben oder rotiert werden, so daß die Borsten 9 gegenüber dem Träger 6 einer Biegewechselbeanspruchung ausgesetzt werden, die an der Biegestelle zu einer Eigenverstärkung nahe der Oberfläche der Borste führt und das Biegeverhalten und Wiederaufrichtvermögen der Borsten zusätzlich verbessert.

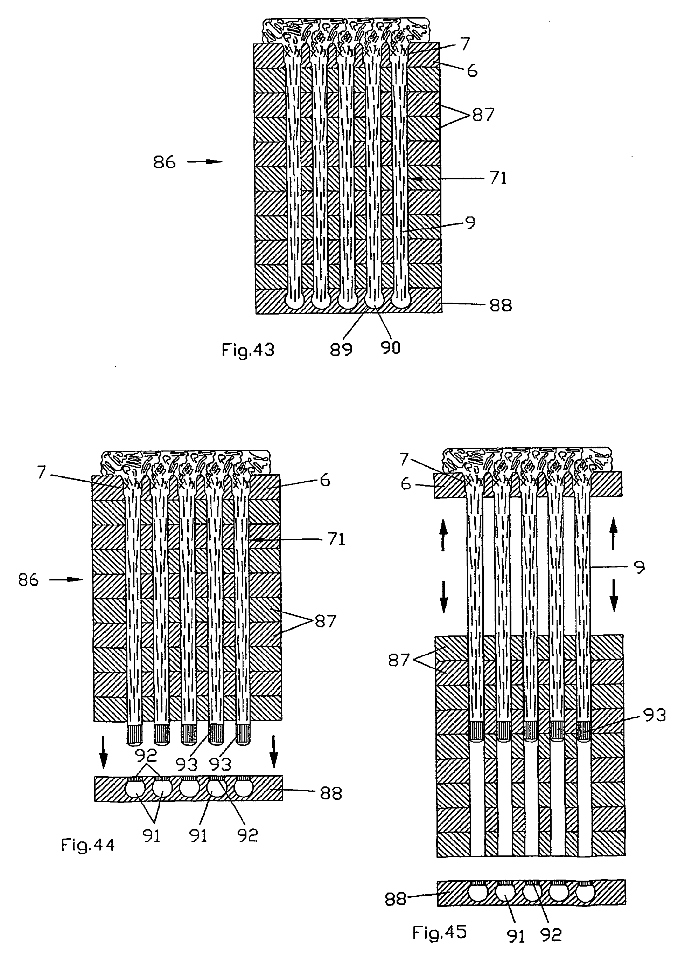

Die Endplatte 88 ist vorzugsweise auswechselbar, um an den Borsten 9 entweder ein Widerlager für das Verstrecken oder aber unterschiedliche Konturen auszubilden. Fig.43 zeigt eine solche Endplatte 88 mit kalottenartigen Erweiterungen 89, um beispielsweise an den Borsten 9 einen Rundkopf 90 auszubilden. Um die Borsten entformen zu können, ist diese Endplatte 88 zusätzlich parallel zu den Formkanälen segmentiert, wie dies mit Bezug auf Fig.33 bis 35 beschrieben worden ist. Dient der Rundkopf 90 nur als Widerlager zum Verstrecken der Borsten 9 und soll er anschließend abgetrennt werden, kann auch dies durch Querverschieben der Endplatte 8 geschehen, die dann als Schneidplatte dient.

Fig.44 zeigt eine andere Ausbildung der Endplatte 88. Sie weist wiederum kalottenförmige Erweiterungen 91 auf, die jedoch an ihrer Anspritzseite mit einer Längsprofilierung 92 versehen sind. Beim Entformen wird zunächst die Endplatte 88 weggefahren und werden die in der kalottenförmigen Erweiterung 91 gebildeten Köpfe borstenparallel angeformt und zugleich mit einem Längsprofil 93 versehen. Anschließend erfolgt das Entformen in der mit Bezug auf Fig.41 und 42 beschriebenen Weise.

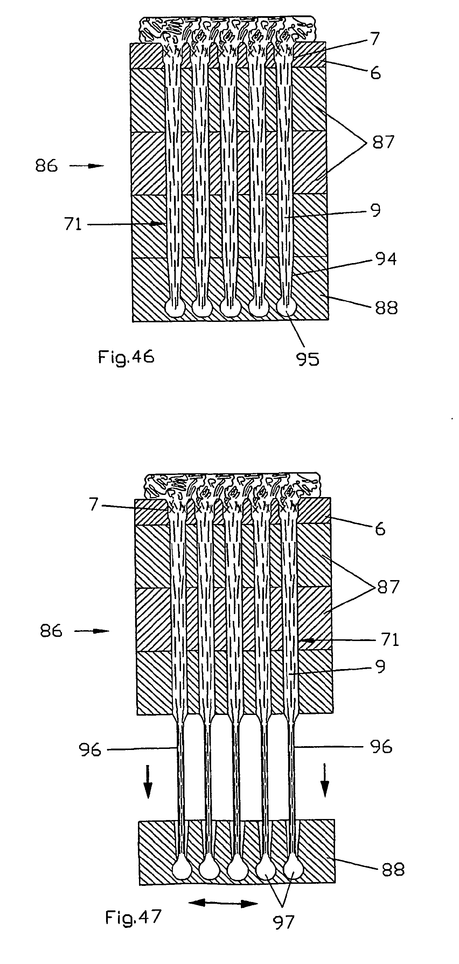

Fig.46 und 47 zeigen nochmals eine andere Ausführung der Endplatte 88 mit einem stärker konisch zulaufenden Abschnitt 94 und einer abschließenden Erweiterung 95, so daß die durchgespritzte Borste 9 ein zunächst verschlanktes und anschließend verdicktes Ende aufweist. Durch Wegfahren der Endplatte 88 wird, wie Fig.47 erkennen läßt, nur der vordere Teil der Borste verstreckt und im Durchmesser reduziert, so daß die entstehende Borste im vorderen Bereich 96 dünner als im übrigen Bereich ist, aufgrund der zusätzlichen Verstreckung gleichwohl eine hohe Biegewechselfestigkeit besitzt. Auch hier ist die Endplatte 88 segmentiert, um die verdickten Enden 97 der Borsten entformen zu können. Dienen die verdickten Enden 97 nur als Widerlager für das Verstrecken, werden sie anschließend abgetrennt. Auch hier kann durch eine oszillierende Querbewegung der Endplatte 88 eine Biegewechselbeanspruchung im Bereich der Querschnittsreduzierung der Borste 9 am Übergang zum Bereich 96 und damit eine Biegereserve eingebracht werden.

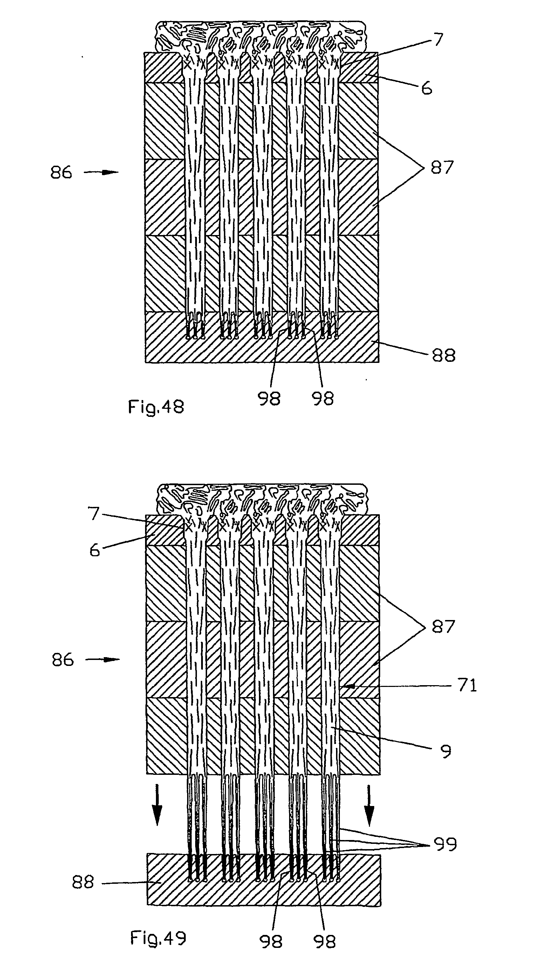

Fig.48 und 49 zeigen eine Spritzgießform 86 zur Herstellung sogenannter Fingerborsten. In diesem Fall weist die Endplatte 88 im Anschluß an jeden Formkanal 71 der Platten 87 mehrere Formkanäle 98 kleineren Querschnitts auf, die sich von der Trennebene zwischen der Enden 88 und der anschließenden Platte 87 konisch verengen und gegebenenfalls noch mit kleinen Erweiterungen am Ende versehen sind. Beim Entformen wird wiederum zunächst die Endplatte 88 weggefahren, so daß die in ihren Formkanälen 98 vorhandene Kunststoffmasse wiederum gelängt und verstreckt wird. Jede einzelne Borste 9 weist dann an ihrem Ende fingerartige Verlängerungen 99 auf.

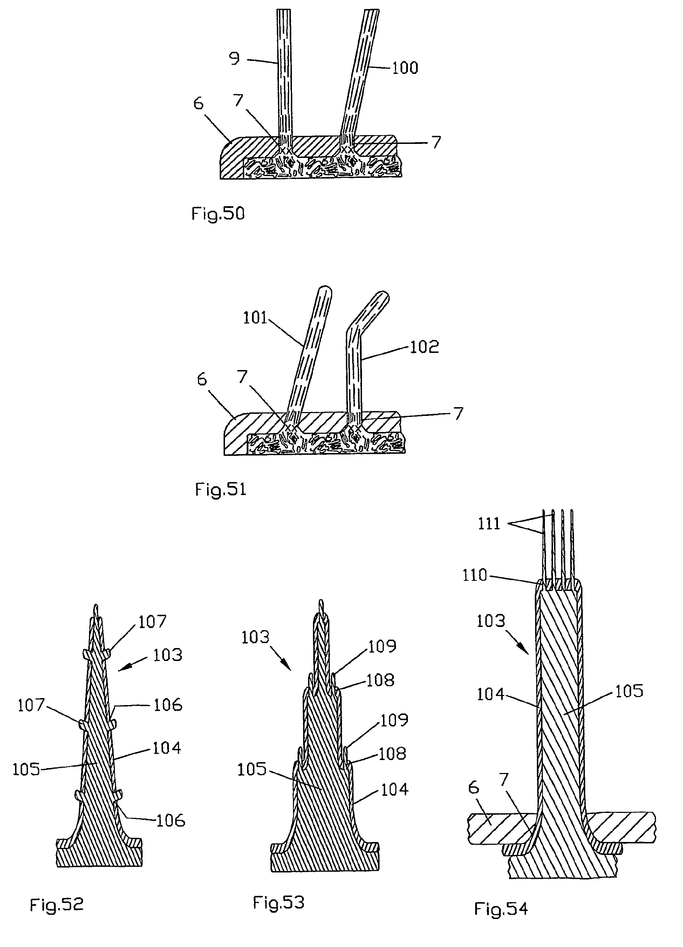

Die Formkanäle 71 in der Spritzgießform 86 können mit den Durchbrüchen 7 in dem Träger 6 fluchten, so daß die Borsten 9, wie Fig.50 zeigt, senkrecht zum Träger 6 verlaufen. Die Formkanäle können aber auch winklig gegenüber den Durchbrüchen 7 am Träger 6 angeordnet sein, so daß eine entsprechend winklig angestellte Borste 100 erzeugt wird. Fig.51 zeigt ein Ausführungsbeispiel, bei dem an einem Träger 6 sowohl eine winklig angeordnete Borste 101, als auch eine abgewinkelte Borste 102 verwirklicht ist, indem der entsprechende Formkanal geknickt ist.

In den Fig.52 bis 54 sind schließlich einige Ausführungsbeispiele von Verbundborsten gezeigt, wie sie mit dem erfindungsgemäßen Verfahren hergestellt werden können. So zeigt Fig.52 eine Verbundborste 103, die aus einer Hohlborste 104 und einer Kernborste 105 gebildet ist. Es kann zunächst die Hohlborste 104, wie mit Bezug auf Fig.31 und 32 beschrieben, durch ringförmige Führung der Schmelze durch die Durchbrüche 7 des Trägers 6 durchgespritzt werden und anschließend die Kernborste 105 in die Hohlborste eingespritzt werden. Im konkreten Fall weist die Hohlborste 105 Perforationslöcher 106 auf, durch die der Kunststoff der Kernborste 105 nach außen dringt und Vorsprünge 107 bildet. Die Verbundborste 103 nach Fig.53 besteht wiederum aus einer Hohlborste 104 und einer Kernborste 105 mit in Spritzrichtung liegenden Perforationen 108 an der Hohlborste 104, durch die die Schmelze der Kernborste 105 zu fingerartigen Vorsprüngen 109 durchgespritzt wird.

Bei dem Ausführungsbeispiel gemäß Fig.54 besteht die Verbundborste 103 aus einer Hohlborste 104 und einer Kernborste 105, wobei die Hohlborste an ihrem Ende Perforationen 110 aufweist, durch die die Schmelze der Kernborste 105 zu fingerartigen Vorsprüngen 111 durchgespritzt wird.

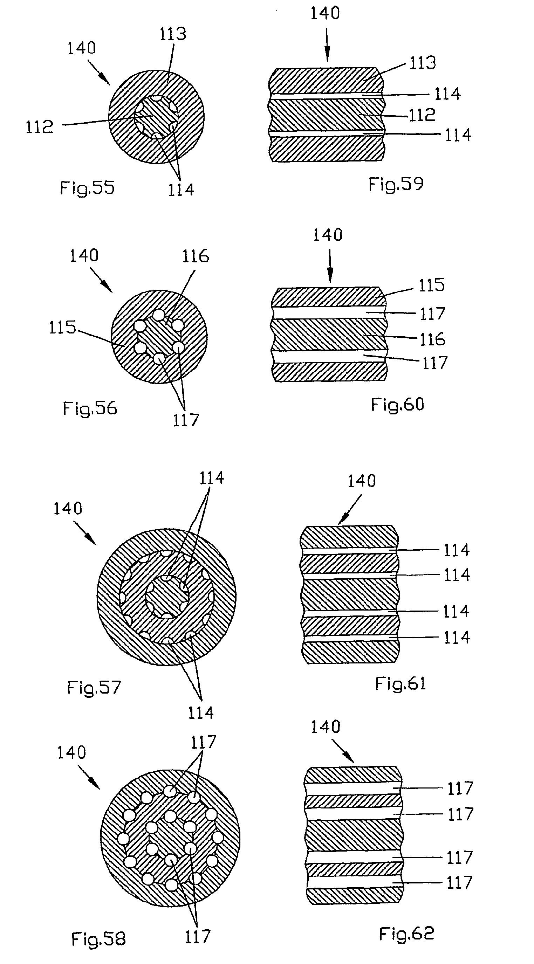

Fig.55 bis 62 zeigen verschiedene Ausführungsformen von konzentrischen Formelementen 140 einer Spritzgießform im Querschnitt und Längsschnitt. Fig.55 zeigt eine profilierte, z.B. achsparallel kanellierte Kernform 112 und eine hohlzylindrische Ringform 113, die an ihrem einander zugekehrten Umfang die Formkanäle 114 bilden. Fig.59 zeigt den zugehörigen Längsschnitt. Das Formelement 140 gemäß Fig.56 besteht aus einer Kernform 116 und einer Ringform 115, die beide an den einander zugekehrten Flächen längs kanelliert sind, so daß zwischen ihnen Formkanäle 117 mit kreisförmigem Querschnitt entstehen. Fig.57 und 61 sowie Fig.58 und 62 zeigen Formelemente 140 mit mehrfach konzentrischer Anordnung zur Bildung konzentrischer Anordnungen von Formkanälen 114 bzw. 117. Diese Formelemente 140, die eine eigenständige Spritzgießform oder Teil einer Spritzgießform gemäß Fig.36 bis 42 bilden können, dienen zur Herstellung bündelartiger Anordnungen von Borsten. Die sie bildenden Teile 112, 113 sind vorzugsweise axial gegeneinander verschiebbar, z.B. nacheinander von innen nach außen, um die nach Durchspritzen der Schmelze durch die Durchbrüche des Trägers und in die Formkanäle 114 bzw. 117 erhaltenen Borsten zu entformen.

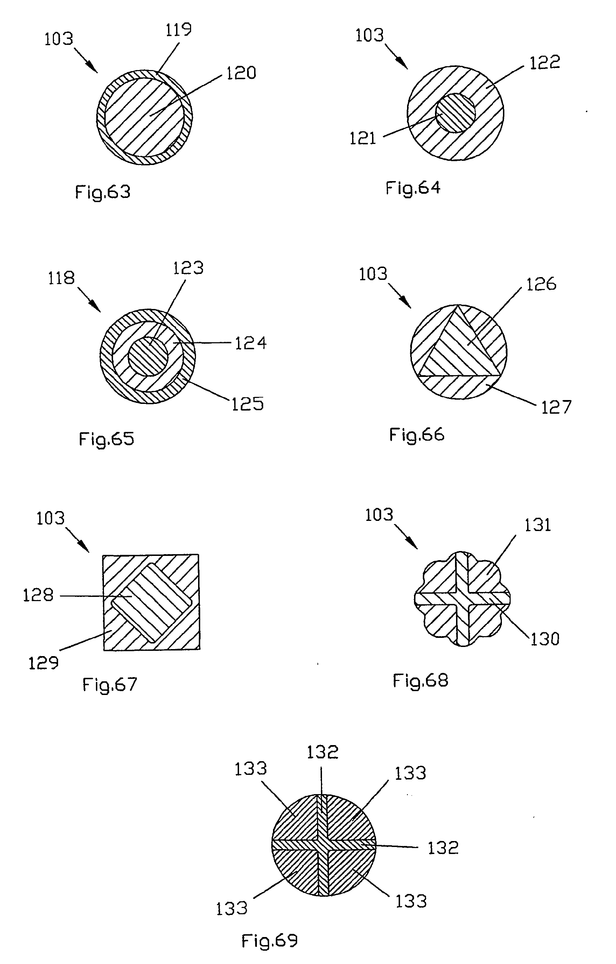

Fig.63 bis 68 zeigen weitere Varianten von Verbundborsten. Die Verbundborste 103 gemäß Fig.63 besteht aus einem massiven Kern 119 und einem dünnen Mantel 120, die, wie auch bei den zuvor beschriebenen Verbundborsten, aus verschiedenen Kunststoffen, oder aus gefüllten und nicht gefüllten Kunststoffen bestehen können. So kann der dünne Mantel 120 in Verbindung mit dem Kern 119 eine Verbrauchsanzeige bilden, indem mit zunehmender Abnutzung der Kern 119 freigelegt wird.

Die Verbundborste 103 gemäß Fig.64 besteht aus einem Kern 121 und einem gegenüber Fig.61 stärkeren Mantel 122, während die Dreifach-Verbundborste 118 aus einem Kern 123 und einer Zwischenschicht 124 und einem Mantel 125 gebildet ist.

Die Querschnitt der Kern- und Hüllborste müssen nicht unbedingt kreisförmig sein. So zeigt Fig.66 eine Verbundborste 103 mit einem dreieckförmigen Kern 126 und einem diesen zur Kreisform ergänzenden Mantel 127, während Fig.67 eine Verbundborste 103 mit rechteckigem Querschnitt wiedergibt, wobei der Kern 128 auf die Diagonalen der rechteckigen Hülle 129 ausgerichtet ist. Fig.68 zeigt eine längsprofilierte Verbundborste 103, bei der der kreuzförmige Kern 130 bis an die Peripherie der den kreuzförmigen Querschnitt ansonsten ausfüllenden zweiten Komponente 131 reicht. Durch unterschiedliche Härte und/oder unterschiedliche Füllung der Kunststoffe für den Kern 130 und die Hülle 131 können härtere Arbeitsflächen an den frei liegenden Enden des kreuzförmigen Kerns geschaffen werden. Fig.69 zeigt schließlich eine Verbundborste 103, die durch eingelagerte Grenzschichten 132 verminderte Sekundärbindungskräfte aufweist. Diese werden bei Gebrauch oder willkürlich durch mechanische Kräfte so weit reduziert, daß die Borste in sektorförmige Finger gespalten wird.

## Patentansprüche

1. Verfahren zur Herstellung von Borstenwaren mit wenigstens einem Träger (6) und daran angeordneten Borsten (9) aus einem gießfähigen Kunststoff, wobei die Borsten aus der Kunststoffschmelze durch Spritzgießen in borstenformenden Kanälen (71) hergestellt werden, **dadurch gekennzeichnet, daß**
- der Träger (6) mit nach Art von Spinndüsen wirkenden Durchbrüchen (7) hergestellt und
- die Durchbrüche (7), an die sich die Kanäle (71) anschließen, wenigstens auf einem Teil ihrer Höhe mit einer kleinsten Weite von ≤3mm versehen werden,
- das Verhältnis dieser Weite zu dem sich aus der Höhe der Durchbrüche (7) und der Länge der Kanäle (71) ergebenden Fließweg der Schmelze ≤1:5 gewählt wird,
- die Kunststoffschmelze von mindestens einer Seite des Trägers (6) - der Zuführseite (3) der Schmelze - durch die Durchbrüche (7) hindurch unter Bildung der Borsten (9) in die Kanäle (71) gespritzt wird.

2. Verfahren nach Anspruch 1, **dadurch gekennzeichnet, daß** das Verhältnis der kleinsten Weite der Durchbrüche (7) zu dem Fließweg der Schmelze ≤1:10 gewählt wird.

3. Verfahren nach Anspruch 2, **dadurch gekennzeichnet, daß** das Verhältnis der kleinsten Weite der Durchbrüche (7) zu dem Fließweg der Schmelze bis zu 1:250 gewählt wird.

4. Verfahren nach Anspruch 1, **dadurch gekennzeichnet, daß** die Durchbrüche (7) mit einem solchen Längs- und/oder Querschnitt ausgelegt werden und/oder der Spritzdruck so gewählt wird, daß sich in der die Durchbrüche (7) passierenden Schmelze eine molekulare Längsorientierung zumindest im peripheren Bereich der Borsten ausbildet.

5. Verfahren nach einem der Ansprüche 1 bis 4, **dadurch gekennzeichnet, daß** die Durchbrüche (7) im Träger (6) mit einer solchen Höhe vorgesehen werden, daß die durchgespritzten Borsten (9) zumindest in dem Bereich von dem Träger (6) umfaßt werden, in welchem noch keine ausreichende molekulare Längsorientierung stattgefunden hat.

6. Verfahren nach einem der Ansprüche 1 bis 5, **dadurch gekennzeichnet, daß** die Borsten (9) mit unterschiedlicher Länge gespritzt werden, so daß die Enden der Borsten an der fertigen Borstenware auf einer nicht-ebenen Hüllfläche liegen.

7. Verfahren nach einem der Ansprüche 1 bis 6, **dadurch gekennzeichnet, daß** die Borsten (9) beim Spritzgießen mit unterschiedlich geformten Enden hergestellt werden.

8. Verfahren nach einem der Ansprüche 1 bis 7, **dadurch gekennzeichnet, daß** die Borsten (9) beim Spritzgießen mit einer profilierten Oberfläche hergestellt werden.

9. Verfahren nach einem der Ansprüche 1 bis 8, **dadurch gekennzeichnet, daß** die Kunststoffschmelze für die Borsten an den Durchbrüchen (7) zur Erzeugung hohler Borsten (58, 60) ringförmig geführt wird.

10. Verfahren nach Anspruch 9, **dadurch gekennzeichnet, daß** nach dem Spritzgießen der hohlen Borsten (104) in den Hohlraum derselben wenigstens eine weitere Kunststoffschmelze zur Erzeugung einer Kernborste (105) eingespritzt wird.

11. Verfahren nach einem der Ansprüche 9 oder 10, **dadurch gekennzeichnet, daß** die hohle Borste (104) mit Perforationen (106) gespritzt und die weitere Kunststoff-Schmelze für die Kernborste (104) durch die Perforation unter Bildung von die Borste (103) überragenden Vorsprüngen (107) durchgespritzt wird.

12. Verfahren nach einem der Ansprüche 1 bis 8, **dadurch gekennzeichnet, daß** zunächst eine Kernborste (105) vorgespritzt und anschließend mit einer Kunststoff-Schmelze für eine sie umgebende Hohlborste (104) zumindest teilweise umspritzt wird.

13. Verfahren nach einem der Ansprüche 1 bis 12, **dadurch gekennzeichnet, daß** der Träger (6) an der Schmelze-Zuführseite (3) mit wenigstens einer Vertiefung (8) und mit wenigstens einem von dieser zur gegenüberliegenden Seite ausgehenden Durchbruch (7) versehen wird, und daß die Vertiefung (8) beim Spritzgießen der Borsten (9) zumindest teilweise mit der Kunststoffschmelze (10) der Borsten (9) ausgefüllt wird.

14. Verfahren nach einem der Ansprüche 1 bis 12, **dadurch gekennzeichnet, daß** ein räumlicher Träger (20) mit den nach Art von Spinndüsen wirkenden Durchbrüchen (7) hergestellt und die Kunststoffschmelze (21) für die Borsten (9) von innen her durch die Durchbrüche (7) durchgespritzt wird.

15. Verfahren nach Anspruch 14, **dadurch gekennzeichnet, daß** der Träger als Rohrabschnitt (20) hergestellt wird.

16. Verfahren nach Anspruch 14 oder 15, **dadurch gekennzeichnet, daß** der Rohrabschnitt (20) an wenigstens einem Ende geschlossen hergestellt wird.

17. Verfahren nach Anspruch 14, **dadurch gekennzeichnet, daß** der von dem räumlichen Träger (20) umschlossene Hohlraum zumindest teilweise mit der Kunststoffschmelze (21) für die Borsten (9) ausgefüllt wird.

18. Verfahren nach einem der Ansprüche 1 bis 17, **dadurch gekennzeichnet, daß** der Träger (6) mit den Durchbrüchen (7) aus Kunststoff durch Spritzgießen hergestellt wird.

19. Verfahren nach einem der Ansprüche 1 bis 17, **dadurch gekennzeichnet, daß** der Träger (6) mit den Durchbrüchen (7) vorgefertigt und in eine die Kanäle (71) für die Borsten (9) aufweisende Spritzgießform (77) eingesetzt wird.

20. Verfahren nach einem der Ansprüche 1 bis 18, **dadurch gekennzeichnet, daß** Träger (6) und Borsten (9) im Zwei- oder Mehrkomponenten-Spritzguß hergestellt werden, indem nach dem Spritzgießen des Trägers (6) mit den Durchbrüchen (7) die Kunststoffschmelze für die Borsten (9) durch die Durchbrüche (7) durchgespritzt wird.

21. Verfahren nach einem der Ansprüche 1 bis 20, **dadurch gekennzeichnet, daß** die Durchbrüche (7) in einer mit den Kanälen (71) fluchtenden Ausrichtung in den Träger (6) eingebracht werden.

22. Verfahren nach einem der Ansprüche 1 bis 20, **dadurch gekennzeichnet, daß** die Durchbrüche (7) in einer zu den Kanälen (71) winkeligen Anordnung in den Träger (6) eingebracht werden.

23. Verfahren nach einem der Ansprüche 1 bis 22**, dadurch gekennzeichnet, daß** die Durchbrüche (7) mit einem sich von der Schmelze-Zuführseite (3) des Trägers (6) zur gegenüberliegenden Seite verengenden Querschnitt nach Art einer Spinndüse versehen werden.

24. Verfahren nach Anspruch 23, **dadurch gekennzeichnet, daß** die Durchbrüche (7) mit einem sich stufenweise verjüngenden Querschnitt in dem Träger (6) geformt werden.

25. Verfahren nach Anspruch 23 oder 24, **dadurch gekennzeichnet, daß** die Durchbrüche (7) an der Schmelze-Zuführseite (3) mit Einlaufschrägen versehen werden.

26. Verfahren nach einem der Ansprüche 23 bis 25, **dadurch gekennzeichnet, daß** die Durchbrüche (7) an der Schmelze-Zuführseite und/oder an der gegenüberliegenden Seite mit einem Kragen (47, 49) versehen werden.

27. Verfahren nach einem der Ansprüche 1 bis 26, **dadurch gekennzeichnet, daß** die Durchbrüche (7) im Träger (6) längs- und/oder querprofiliert werden.

28. Verfahren nach einem der Ansprüche 1 bis 27, **dadurch gekennzeichnet, daß** die Durchbrüche (7) in dem Träger (6) entsprechend der Anordnung der Borsten (9) an der fertigen Borstenware eingebracht werden.

29. Verfahren nach einem der Ansprüche 1 bis 28, **dadurch gekennzeichnet, daß** der Träger (6) zumindest in Teilbereichen in wenigstens zwei Schichten aus jeweils verschiedenen Werkstoffen hergestellt wird.

30. Verfahren nach einem der Ansprüche 1 bis 29, **dadurch gekennzeichnet, daß** die Borsten (9) aus wenigstens zwei verschiedenen Kunststoffen gespritzt werden.

31. Verfahren nach Anspruch 1, **dadurch gekennzeichnet, daß** die durch den Träger (6) durchgespritzten Borsten (9) nach dem Spritzgießen auf ihrer gesamten Länge oder auf Teillängen verstreckt werden.

32. Verfahren nach Anspruch 31, **dadurch gekennzeichnet, daß** die Borsten durch Zugkräfte und/oder durch Biegewechselkräfte verstreckt bzw. gedehnt werden.

33. Verfahren nach Anspruch 1 und 31, **dadurch gekennzeichnet, daß** an die dem Träger (6) gegenüberliegenden Enden der Borsten beim Spritzgießen Widerlager (84) angeformt werden, und daß die Borsten (9) durch den Abstand zwischen Träger (6) und Widerlager (84) vergrößernde Zugkräfte verstreckt werden.

34. Verfahren nach Anspruch 33, **dadurch gekennzeichnet, daß** die Widerlager in Form von Verdickungen (96) ausgebildet werden.

35. Verfahren nach Anspruch 34, **dadurch gekennzeichnet, daß** die Verdickungen (90) beim Verstrecken der Borsten (9) borstenbündig umgeformt werden.

36. Verfahren nach Anspruch 33, **dadurch gekennzeichnet, daß** an die Enden der Borsten (9) ein diese verbindendes plattenförmiges Widerlager (84) angespritzt wird, und daß das Widerlager nach dem Verstrecken der Borsten (9) unter Bildung der freien Enden der Borsten abgetrennt wird.

37. Verfahren nach Anspruch 33, **dadurch gekennzeichnet, daß** der Abstand zwischen dem Widerlager (84, 90) und dem Träger (6) stufenweise vergrößert wird.

38. Verfahren nach einem der Ansprüche 1 bis 37, **dadurch gekennzeichnet, daß** die Borsten (9) nach dem Spritzgießen und/oder nach dem Verstrecken stabilisiert werden.

39. Verfahren nach Anspruch 1, **dadurch gekennzeichnet, daß** der Träger (6) mit den durchgespritzten Borsten (9) mit einem Bürstenkörper und/oder einer Handhabe verbunden wird.

40. Verfahren nach Anspruch 1, **dadurch gekennzeichnet, daß** für den Träger (6) und die Borsten (9) gleiche Kunststoffe eingesetzt werden.

41. Verfahren nach Anspruch 1, **dadurch gekennzeichnet, daß** für den Träger (6) und die Borsten (9) unterschiedliche, unterschiedlich modifizierte oder verschiedenfarbige Kunststoffe eingesetzt werden.

42. Verfahren nach Anspruch 1, **dadurch gekennzeichnet, daß** für den Träger (6) und die Borsten (9) Kunststoffe eingesetzt werden, die beim Durchspritzen der Kunststoffschmelze für die Borsten miteinander verschweißen.

43. Verfahren nach Anspruch 1, **dadurch gekennzeichnet, daß** zumindest für die Borsten (9) Kunststoffe oder Kunststoffmischungen mit die chemischen, physikalischen, mechanischen oder gebrauchstechnischen Eigenschaften beeinflussenden Füllstoffen eingesetzt werden.

44. Verfahren nach Anspruch 43, **dadurch gekennzeichnet, daß** für die Borsten und/oder den Träger Kunststoffe mit antimikrobiell wirkenden Füllstoffen eingesetzt werden.

45. Verfahren nach Anspruch 43, **dadurch gekennzeichnet, daß** als Füllstoffe Fasern eingesetzt werden.

46. Verfahren nach Anspruch 44, **dadurch gekennzeichnet, daß** Fasern mit einer Länge eingesetzt werden, die mindestens teilweise größer als der engste Querschnitt der Durchbrüche (7) im Träger (6) ist.

47. Verfahren nach Anspruch 45 oder 46, **dadurch gekennzeichnet, daß** Fasern aus einem Kunststoff eingesetzt werden, dessen Schmelztemperatur nahe der Schmelztemperatur des Kunststoffs für die Borsten (9) liegt.

48. Verfahren nach einem der Ansprüche 45 bis 47, **dadurch gekennzeichnet, daß** Fasern aus extrusionsgesponnenen Monofilen eingesetzt werden.

49. Borstenware mit einem Träger und daran angeordneten, aus einem thermoplastischen Kunststoff spritzgegossenen Borsten, **dadurch gekennzeichnet, daß** der Träger (6) wenigstens einen Durchbruch (7) aufweist, der auf wenigstens einem Teil seiner Höhe eine kleinste Weite von ≤3mm aufweist, und daß jeder Durchbruch (7) eine durchgespritzte Borste (9) aufnimmt, deren maximale Ausdehnung quer zu ihrer Achse ≤3mm ist und wobei das Verhältnis dieser Ausdehnung zu einer Länge der Borste (9) ≤1:5 vorzugsweise ≤1:10 bis 1:250 ist.

50. Borstenware nach Anspruch 49, **dadurch gekennzeichnet, daß** der Querschnitt der Borsten (9) dem Querschnitt der Durchbrüche (7) etwa entspricht oder kleiner ist.

51. Borstenware nach Anspruch 49, **dadurch gekennzeichnet, daß** wenigstens ein Teil der Borsten (9) hohl ausgebildet ist.

52. Borstenware nach Anspruch 51, **dadurch gekennzeichnet, daß** die hohlen Borsten (59, 60) an ihrem freien Ende offen oder geschlossen sind.

53. Borstenware nach Anspruch 51 oder 52, **dadurch gekennzeichnet, daß** die hohle Borste (104) eine sie ausfüllende Kernborste (105) umgibt.

54. Borstenware nach Anspruch 53, **dadurch gekennzeichnet, daß** die hohle Borste (104) eine sie ausfüllende Kernborste (105) aus einem anderen Kunststoff umgibt.

55. Borstenware nach Anspruch 53 oder 54, **dadurch gekennzeichnet, daß** die hohle Borste (104) perforiert ist und die von ihr umgebene Kernborste (105) die Perforation (106, 108) unter Bildung von Vorsprüngen (107, 109) an der Außenseite der Borste (103) durchgreift.

56. Borstenware nach Anspruch 49, **dadurch gekennzeichnet, daß** zumindest ein Teil der Borsten (103) fingerartige Fortsätze (111) aufweist.

57. Borstenware nach Anspruch 49, **dadurch gekennzeichnet, daß** zumindest ein Teil der Borsten (9) einen mit Partikeln und/oder Fasern gefüllten Kunststoff aufweist.

58. Borstenware nach Anspruch 49, **dadurch gekennzeichnet, daß** zumindest ein Teil der Borsten (103) im wesentlichen achsparallel verlaufende, die sekundären Bindungskräfte quer zur Molekularorientierung reduzierende Strukturen (132) aufweist;

59. Borstenware nach Anspruch 58, **dadurch gekennzeichnet, daß** die Borsten (103) entlang der Strukturen (132) zu Fingern oder dergleichen desintegrierbar sind.

60. Borstenware nach Anspruch 49, **dadurch gekennzeichnet, daß** zumindest ein Teil der Borsten (9) aus einem energieleitenden Kunststoff besteht.

61. Borstenware nach Anspruch 60, **dadurch gekennzeichnet, daß** die Borsten (9) zumindest in ihrem Kernbereich aus einem transparenten, lichtleitenden Kunststoff bestehen.

62. Borstenware nach Anspruch 49, **dadurch gekennzeichnet, daß** der Träger (6) wenigstens eine Vertiefung (8) aufweist und von jeder Vertiefung wenigstens ein Durchbruch (7) ausgeht und die Vertiefung mit dem Kunststoff (80) der Borsten (9) gefüllt ist.

63. Borstenware nach Anspruch 49, **dadurch gekennzeichnet, daß** der Träger (6) und/oder die Borsten (9) aus verschiedenen Kunststoffen bestehen.

64. Borstenware nach Anspruch 49, **dadurch gekennzeichnet, daß** der Träger (6) zumindest in Teilbereichen mehrschichtig ausgebildet ist.

65. Borstenware nach Anspruch 49, **dadurch gekennzeichnet, daß** der Träger (6) mindestens teilweise aus einem flexiblen und/oder gummielastischen Kunststoff besteht.

66. Borstenware nach Anspruch 49, **dadurch gekennzeichnet, daß** die Borsten aus einem antimikrobiell ausgerüsteten Kunststoff bestehen.

67. Borstenware nach Anspruch 49, **dadurch gekennzeichnet, daß** der Träger antimikrobiell ausgerüstet, ist.

## Claims

1. Method for the fabrication of brushwares comprising at least one carrier (6) and bristles (9) of a mouldable plastic material that are arranged thereon, with the bristles being fabricated from the plastic melt by injection moulding in bristle-forming channels (71), **characterized in that**
- the carrier (6) is fabricated with breakthroughs (7) acting in the manner of spinning nozzles, and
- the breakthroughs (7), which are adjoined by the channels (71), are provided with a smallest width of ≤ 3mm at least in a portion of their height,
- the ratio of said width relative to the flow path of the melt is chosen ≤ 1:5, the flow path being obtained from the height of the breakthroughs (7) and the length of the channels (71),
- the plastic melt is injected through the breakthroughs (7) into the channels (71) from at least one side of the carrier (6) - the feed side (3) of the melt - thus forming the bristles (9).

2. Method according to claim 1, **characterised in that** the ratio of the smallest width of the breakthroughs (7) relative to the flow path of the melt is chosen ≤ 1:10 .

3. Method according to claim 2, **characterised in that** the ratio of the smallest width of the breakthroughs (7) relative to the flow path of the melt is chosen up to 1:250.

4. Method according to claim 1, **characterised in that** the breakthroughs (7) have such a longitudinal section and/or cross-section and/or the injection pressure is chosen such that a molecular longitudinal orientation forms in the melt passing through the breakthroughs (7) at least in the peripheral region of the bristles.

5. Method according to any one of claims 1 to 4, **characterised in that** the breakthroughs (7) in the carrier (6) are provided with such a height that the injection-moulded bristles (9) are enclosed by the carrier at least in the region where a sufficient molecular longitudinal orientation has not yet occurred.

6. Method according to any one of claims 1 to 5, **characterised in that** the bristles (9) are injection-moulded with varying length so that the ends of the bristles are disposed on a non-plane envelope of the finished brushware.

7. Method according to any one of claims 1 to 6, **characterised in that** the bristles (9) are fabricated with differently formed ends during injection moulding.

8. Method according to any one of claims 1 to 7, **characterised in that** the bristles (9) are fabricated with a profiled surface during injection moulding.

9. Method according to any one of claims 1 to 8, **characterised in that** the plastic melt for the bristles is guided in the shape of a ring at the breakthroughs (7) so as to produce hollow bristles (58, 60).

10. Method according to claim 9, **characterised in that** at least another plastic melt for producing a core bristle (105) is injected into the hollow space of the hollow bristles (104) after injection-moulding thereof.

11. Method according to any one of claims 9 or 10, **characterised in that** the hollow bristle (104) is injection-moulded with perforations (106) and the other plastic melt for the core bristle (104) is injected through the perforation, thus forming protrusions (107) projecting beyond the bristle (103).

12. Method according to any one of claims 1 to 8, **characterised in that** a core bristle (105) is pre-moulded in a first step and is then at least partially surrounded by a plastic melt for a hollow bristle (104) surrounding said core bristle (105).

13. Method according to any one of claims 1 to 12, **characterised in that** the carrier (6) is provided at the melt feed side (3) with at least one recess (8) and with at least one breakthrough (7) passing from said melt feed side (3) to the opposite side, and that the recess (8) is at least partially filled with the plastic melt (10) of the bristles (9) during injection-moulding of the bristles (9).

14. Method according to any one of claims 1 to 12, **characterised in that** a spatial carrier (20) is fabricated with the breakthroughs (7) acting in the manner of spinning nozzles and the plastic melt (21) for the bristles (9) is injected through the breakthroughs (7) from inside.

15. Method according to claim 14, **characterised in that** the carrier is fabricated as a tube portion (20).

16. Method according to claim 14 or 15, **characterised in that** the tube portion (20) is fabricated such as to be closed on at least one end.

17. Method according to claim 14, **characterised in that** the hollow space enclosed by the spatial carrier (20) is at least partially filled with the plastic melt (21) for the bristles (9).

18. Method according to any one of claims 1 to 17, **characterised in that** the carrier (6) with the breakthroughs (7) is fabricated from plastic material by injection moulding.

19. Method according to any one of claims 1 to 17, **characterised in that** the carrier (6) with the breakthroughs (7) is prefabricated and inserted into an injection mould (77) comprising the channels (71) for the bristles (9).

20. Method according to any one of claims 1 to 18, **characterised in that** carrier (6) and bristles (9) are fabricated by a two-component or multiple-component injection moulding process by injecting the plastic melt for the bristles (9) through the breakthroughs (7) after injection moulding of the carrier (6) comprising the breakthroughs (7).

21. Method according to any one of claims 1 to 20, **characterised in that** the breakthroughs (7) are produced in the carrier (6) such as to be aligned with the channels (71).

22. Method according to any one of claims 1 to 20, **characterised in that** the breakthroughs (7) are produced in the carrier (6) at an angle relative to the channels (71).

23. Method according to any one of claims 1 to 22, **characterised in that** the breakthroughs (7) are provided with a cross-section which narrows from the melt feed side (3) of the carrier (6) towards the opposite side in the manner of a spinning nozzle.

24. Method according to claim 23, **characterised in that** the breakthroughs (7) are formed in the carrier (6) with a gradually tapering cross-section.

25. Method according to claim 23 or 24, **characterised in that** the breakthroughs (7) are provided with inlet chamfers on the melt feed side (3).

26. Method according to any one of claims 23 to 25, **characterised in that** the breakthroughs (7) are provided with a collar (47, 49) on the melt feed side and/or on the opposite side.

27. Method according to any one of claims 1 to 26, **characterised in that** the breakthroughs (7) in the carrier (6) are provided with longitudinal and/or transverse profiles.

28. Method according to any one of claims 1 to 27, **characterised in that** the breakthroughs (7) are produced in the carrier (6) according to the arrangement of the bristles (9) on the finished brushware.

29. Method according to any one of claims 1 to 28, **characterised in that** at least portions of the carrier (6) are fabricated in at least two layers of in each case different materials.

30. Method according to any one of claims 1 to 29, **characterised in that** the bristles (9) are injection-moulded of at least two different plastic materials.

31. Method according to claim 1, **characterised in that** the bristles (9) injected through the carrier (6) are stretched along their entire length or along partial lengths after injection-moulding.

32. Method according to claim 31, **characterised in that** the bristles are stretched or extended, respectively, by tensile forces and/or cyclic bending forces.

33. Method according to claims 1 and 31, **characterised in that** counter bearings (84) are formed on the ends of the bristles opposite to the carrier (6) during injection moulding, and that the bristles (9) are stretched by tensile forces increasing the distance between carrier (6) and counter bearing (84).

34. Method according to claim 33, **characterised in that** the counter bearings are produced in the form of thickenings (96).

35. Method according to claim 34, **characterised in that** the thickenings (90) are formed such during stretching of the bristles (9) as to align with the bristles (9).

36. Method according to claim 33, **characterised in that** a plate-shaped counter bearing (84) is formed by injection moulding on the ends of the bristles (9), said counter bearing (84) interconnecting the bristles (9), and that after stretching the bristles (9), the counter bearing is separated therefrom, thus forming the free ends.

37. Method according to claim 33, **characterised in that** the distance between the counter bearing (84, 90) and the carrier (6) is increased gradually.

38. Method according to any one of claims 1 to 37, **characterised in that** the bristles (9) are stabilised after injection moulding and/or after stretching.

39. Method according to claim 1, **characterised in that** the carrier (6) with the injected bristles (9) is connected to a brush body and/or a handle.

40. Method according to claim 1, **characterised in that** identical plastic materials are used for the carrier (6) and the bristles (9).

41. Method according to claim 1, **characterised in that** different, differently modified or differently coloured plastic materials are used for the carrier (6) and the bristles (9).

42. Method according to claim 1, **characterised in that** for the carrier (6) and the bristles (9) are used plastic materials which weld together when injecting the plastic melt for the bristles.

43. Method according to claim 1, **characterised in that** at least for the bristles (9) are used plastic materials or mixtures of plastic materials containing fillers which affect the chemical, physical, mechanical or practical properties thereof.

44. Method according to claim 43, **characterised in that** plastic materials with antimicrobial fillers are used for the bristles and/or the carrier.

45. Method according to claim 43, **characterised in that** fibres are used as fillers.

46. Method according to claim 44, **characterised in that** fibres are used which have a length which at least partially exceeds the narrowest cross-section of the breakthroughs (7) in the carrier (6).

47. Method according to claim 45 or 46, **characterised in that** fibres of a plastic material are used whose melting temperature is close to the melting temperature of the plastic material for the bristles (9).

48. Method according to any one of claims 45 to 47, **characterised in that** fibres of extrusion-spun monofils are used.

49. Brushware comprising a carrier and bristles which are arranged thereon and are injection-moulded from a thermoplastic material, **characterised in that** the carrier (6) comprises at least one breakthrough (7) which comprises a smallest width of ≤ 3 mm in at least a portion of its height, and that each breakthrough (7) accommodates an injected bristle (9) whose maximum extension perpendicular to its axis is ≤ 3 mm, with the ratio of this extension to a length of the bristle (9) is ≤ 1:5, preferably ≤ 1:10 to 1:250.

50. Brushware according to claim 49, **characterised in that** the cross-section of the bristles (9) approximately corresponds to or is smaller than the cross-section of the breakthroughs (7).

51. Brushware according to claim 49, **characterised in that** at least a portion of the bristles (9) is hollow.

52. Brushware according to claim 51, **characterised in that** the hollow bristles (59, 60) are open or closed on their free end.

53. Brushware according to claim 51 or 52, **characterised in that** the hollow bristle (104) surrounds a core bristle (105) filling said hollow bristle (104).

54. Brushware according to claim 53, **characterised in that** the hollow bristle (104) surrounds a core bristle (105) which fills said hollow bristle (104) and is made of a different plastic material.

55. Brushware according to claim 53 or 54, **characterised in that** the hollow bristle (104) is perforated and the core bristle (105) surrounded by said hollow bristle (104) passes through the perforation (106, 108), thus forming protrusions (107, 109) on the outside of the bristle (103).

56. Brushware according to claim 49, **characterised in that** at least a portion of the bristle (103) comprises finger-like projections (111).

57. Brushware according to claim 49, **characterised in that** at least a portion of the bristles (9) comprises a plastic material filled with particles and/or fibres.

58. Brushware according to claim 49, **characterised in that** at least a portion of the bristles (103) comprises substantially axis-parallel structures (132) which reduce the secondary bonding forces perpendicular to the molecular orientation.

59. Brushware according to claim 58, **characterised in that** the bristles (103) are disintegratable along the structures (132) so as to form fingers or the like.

60. Brushware according to claim 49, **characterised in that** at least a portion of the bristles (9) consists of an energy-conducting plastic material.

61. Brushware according to claim 60, **characterised in that** the bristles (9) consist of a transparent, light-conducting plastic material at least in their core region.

62. Brushware according to claim 49, **characterised in that** the carrier (6) comprises at least one recess (8) and at least one breakthrough (7) extends from each recess and the recess is filled with the plastic material (80) of the bristles (9).

63. Brushware according to claim 49, **characterised in that** the carrier (6) and/or the bristles (9) consist of different plastic materials.

64. Brushware according to claim 49, **characterised in that** at least portions of the carrier (6) have a multilayer design.

65. Brushware according to claim 49, **characterised in that** the carrier (6) consists at least partially of a flexible and/or rubber-elastic plastic material.

66. Brushware according to claim 49, **characterised in that** the bristles consist of a plastic material which is provided with antimicrobials.

67. Brushware according to claim 49, **characterised in that** the carrier is provided with antimicrobials.

## Revendications

1. Procédé de production de produits à poils avec au moins un support (6) et des poils (9) qui y sont disposés en un plastique coulable, les poils étant fabriqués à partir du plastique en fusion par moulage par injection dans des canaux formant les poils (71), **caractérisé en ce que**
- le support (6) est fabriqué avec des passages (7) agissant à la manière de filières et
- les passages (7), auxquels se raccordent les canaux (71), sont dotés sur au moins une partie de leur hauteur d'une largeur dont la plus petite valeur est ≤ 3 mm,
- le rapport de cette largeur au chemin d'écoulement de la matière en fusion résultant de la hauteur des passages (7) et de la longueur des canaux (71) est sélectionné ≤ 1:5,
- le plastique en fusion est injecté dans les canaux (71) depuis au moins un côté du support (6) - le côté d'alimentation (3) de la matière en fusion - à travers les passages (7) en formant les poils (9).

2. Procédé selon la revendication 1, **caractérisé en ce que** le rapport de la plus petite largeur des passages (7) au chemin d'écoulement de la matière en fusion est sélectionné ≤ 1:10.

3. Procédé selon la revendication 2, **caractérisé en ce que** le rapport de la plus petite largeur des passages (7) au chemin d'écoulement de la matière en fusion est sélectionné jusqu'à 1:250.

4. Procédé selon la revendication 1, **caractérisé en ce que** les passages (7) sont conçus avec une section longitudinale et/ou transversale et/ou la pression d'injection est sélectionnée de telle sorte que dans la matière en fusion passant par les passages (7), une orientation longitudinale moléculaire se forme au moins dans la zone périphérique des poils.

5. Procédé selon l'une quelconque des revendications 1 à 4, **caractérisé en ce que** les passages (7) sont prévus dans le support (6) avec une hauteur telle que les poils (9) moulés par injection à travers ceux-ci sont enserrés au moins dans la zone du support (6), dans laquelle une orientation longitudinale moléculaire suffisante n'a pas encore eu lieu.

6. Procédé selon l'une quelconque des revendications 1 à 5, **caractérisé en ce que** les poils (9) sont moulés par injection en différentes longueurs, de sorte que les extrémités des poils sur le produit à poils fini se trouvent sur une surface enveloppante non plane.

7. Procédé selon l'une quelconque des revendications 1 à 6, **caractérisé en ce que** les poils (9) sont fabriqués lors du moulage par injection avec des extrémités de forme différente.

8. Procédé selon l'une quelconque des revendications 1 à 7, **caractérisé en ce que** les poils (9) sont fabriqués lors du moulage par injection avec une surface profilée.

9. Procédé selon l'une quelconque des revendications 1 à 8, **caractérisé en ce que** le plastique en fusion pour les poils est guidé de manière annulaire au niveau des passages (7) pour produire des poils creux (58, 60).

10. Procédé selon la revendication 9, **caractérisé en ce qu'**après le moulage par injection des poils creux (104), au moins un autre plastique en fusion est injecté dans leur cavité pour produire un poil noyau (105).

11. Procédé selon l'une quelconque des revendications 9 ou 10, **caractérisé en ce que** le poil creux (104) est moulé par injection avec des perforations (106) et l'autre plastique en fusion pour le poil noyau (104) est moulé par injection à travers la perforation en formant des saillies (107) dépassant du poil (103).

12. Procédé selon l'une quelconque des revendications 1 à 8, **caractérisé en ce qu'**un poil noyau (105) est d'abord prémoulé par injection et ensuite enrobé au moins en partie avec un plastique en fusion pour un poil creux (104) l'entourant.

13. Procédé selon l'une quelconque des revendications 1 à 12, **caractérisé en ce que** le support (6) est doté du côté de l'alimentation de matière en fusion (3) d'au moins un évidement (8) et d'au moins un passage (7) partant de celui-ci vers le côté opposé et **en ce que** l'évidement (8) est rempli lors du moulage par injection des poils (9) au moins en partie de plastique en fusion (10) des poils (9).

14. Procédé selon l'une quelconque des revendications 1 à 12, **caractérisé en ce qu'**un support tridimensionnel (20) est fabriqué avec des passages (7) agissant à la manière de filières et le plastique en fusion (21) pour les poils (9) est moulé par injection depuis l'intérieur à travers les passages (7).

15. Procédé selon la revendication 14, **caractérisé en ce que** le support est fabriqué sous forme de section tubulaire (20).

16. Procédé selon la revendication 14 ou 15, **caractérisé en ce que** la section tubulaire (20) est fabriquée fermée à au moins une extrémité.

17. Procédé selon la revendication 14, **caractérisé en ce que** la cavité entourée par le support tridimensionnel (20) est remplie au moins en partie de plastique en fusion (21) pour les poils (9).

18. Procédé selon l'une quelconque des revendications 1 à 17, **caractérisé en ce que** le support (6) est fabriqué avec les passages (7) en plastique par moulage par injection.

19. Procédé selon l'une quelconque des revendications 1 à 17, **caractérisé en ce que** le support (6) est pré-fabriqué avec les passages (7) et inséré dans un moule de moulage par injection (77) présentant les canaux (71) pour les poils (9).

20. Procédé selon l'une quelconque des revendications 1 à 18, **caractérisé en ce que** le support (6) et les poils (9) sont fabriqués par moulage par injection à deux ou plusieurs composants, par le fait qu'après le moulage par injection du support (6) avec les passages (7), le plastique en fusion pour les poils (9) est moulé par injection à travers les passages (7).

21. Procédé selon l'une quelconque des revendications 1 à 20, **caractérisé en ce que** les passages (7) sont introduits dans le support (6) en alignement avec les canaux (71).

22. Procédé selon l'une quelconque des revendications 1 à 20, **caractérisé en ce que** les passages (7) sont introduits dans le support (6) selon un agencement coudé par rapport aux canaux (71).

23. Procédé selon l'une quelconque des revendications 1 à 22, **caractérisé en ce que** les passages (7) sont dotés d'une section transversale se resserrant du côté de l'alimentation de matière en fusion (3) du support (6) vers le côté opposé à la manière d'une filière.

24. Procédé selon la revendication 23, **caractérisé en ce que** les passages (7) sont moulés dans le support (6) avec une section transversale s'effilant progressivement.

25. Procédé selon la revendication 23 ou 24, **caractérisé en ce que** les passages (7) sont dotés du côté de l'alimentation de matière en fusion (3) de biseaux d'entrée.

26. Procédé selon l'une quelconque des revendications 23 à 25, **caractérisé en ce que** les passages (7) sont dotés du côté de l'alimentation de matière en fusion et/ou du côté opposé d'une collerette (47, 49) .

27. Procédé selon l'une quelconque des revendications 1 à 26, **caractérisé en ce que** les passages (7) sont profilés dans le sens longitudinal et/ou transversal dans le support (6).

28. Procédé selon l'une quelconque des revendications 1 à 27, **caractérisé en ce que** les passages (7) sont introduits dans le support (6) en fonction de l'agencement des poils (9) sur le produit à poils fini.

29. Procédé selon l'une quelconque des revendications 1 à 28, **caractérisé en ce que** le support (6) est fabriqué au moins dans des parties de zone dans au moins deux couches en matériaux respectivement différents.

30. Procédé selon l'une quelconque des revendications 1 à 29, **caractérisé en ce que** les poils (9) sont moulés par injection à partir d'au moins deux plastiques différents.

31. Procédé selon la revendication 1, **caractérisé en ce que** les poils (9) moulés par injection à travers le support (6) sont étirés après le moulage par injection sur toute leur longueur ou sur des parties de leur longueur.

32. Procédé selon la revendication 31, **caractérisé en ce que** les poils sont étirés ou allongés par des efforts de traction et/ou des efforts de flexion alternée.

33. Procédé selon la revendication 1 et 31, **caractérisé en ce que** des contre-appuis (84) sont formés lors du moulage par injection au niveau des extrémités des poils opposées au support (6), et **en ce que** les poils (9) sont étirés par les efforts de traction augmentant la distance entre le support (6) et le contre-appui (84).

34. Procédé selon la revendication 33, **caractérisé en ce que** les contre-appuis sont réalisés sous forme d'épaississements (96).

35. Procédé selon la revendication 34, **caractérisé en ce que** les épaississements (90) sont transformés à fleur avec les poils lors de l'étirage des poils (9).

36. Procédé selon la revendication 33, **caractérisé en ce qu'**au niveau des extrémités des poils (9), un contre-appui (84) en forme de plaque reliant celles-ci est moulé par injection et **en ce que** le contre-appui est séparé après l'étirage des poils (9) en formant les extrémités libres des poils.

37. Procédé selon la revendication 33, **caractérisé en ce que** la distance entre le contre-appui (84, 90) et le support (6) augmente progressivement.

38. Procédé selon l'une quelconque des revendications 1 à 37, **caractérisé en ce que** les poils (9) sont stabilisés après moulage par injection et/ou après étirage.

39. Procédé selon la revendication 1, **caractérisé en ce que** le support (6) avec les poils (9) moulés par injection est relié à un corps de brosse et/ou à un manche.

40. Procédé selon la revendication 1, **caractérisé en ce que** l'on utilise les mêmes plastiques pour le support (6) et les poils (9).

41. Procédé selon la revendication 1, **caractérisé en ce que** l'on utilise pour le support (6) et les poils (9), des plastiques différents, modifiés différemment ou de couleur différente.

42. Procédé selon la revendication 1, **caractérisé en ce que** l'on utilise pour le support (6) et les poils (9) des plastiques qui se soudent l'un à l'autre lors du moulage par injection du plastique en fusion pour les poils.

43. Procédé selon la revendication 1, **caractérisé en ce que** l'on utilise au moins pour les poils (9), des plastiques ou des mélanges de plastiques avec des matières de charge influençant les propriétés chimiques, physiques, mécaniques ou les conditions d'utilisation.

44. Procédé selon la revendication 43, **caractérisé en ce que** l'on utilise pour les poils et/ou le support, des plastiques avec des matières de charge à action antimicrobienne.

45. Procédé selon la revendication 43, **caractérisé en ce que** l'on utilise des fibres comme matières de charge.

46. Procédé selon la revendication 44, **caractérisé en ce que** l'on utilise des fibres ayant une longueur qui est au moins en partie supérieure à la section transversale la plus étroite des passages (7) dans le support (6).

47. Procédé selon la revendication 45 ou 46, **caractérisé en ce que** l'on utilise des fibres en un plastique dont la température de fusion est proche de la température de fusion du plastique pour les poils (9).

48. Procédé selon l'une quelconque des revendications 45 à 47, **caractérisé en ce que** l'on utilise des fibres en monofils filés par extrusion.

49. Produit à poils avec un support et des poils qui y sont agencés, moulés par injection en un plastique thermoplastique, **caractérisé en ce que** le support (6) présente au moins un passage (7), qui présente sur au moins une partie de sa hauteur une largeur dont la plus petite valeur est ≤ 3 mm, et **en ce que** chaque passage (7) reçoit un poil (9) moulé par injection à travers celui-ci, dont l'allongement maximum transversalement à son axe est ≤ 3 mm et dans lequel le rapport de cet allongement à une longueur du poil (9) est ≤ 1:5, de préférence de ≤ 1:10 à ≤ 1:250.

50. Produit à poils selon la revendication 49, **caractérisé en ce que** la section transversale des poils (9) correspond à peu près à la section transversale des passages (7) ou est inférieure à cette dernière.

51. Produit à poils selon la revendication 49, **caractérisé en ce qu'**au moins une partie des poils (9) est réalisée de manière creuse.

52. Produit à poils selon la revendication 51, **caractérisé en ce que** les poils creux (59, 60) sont ouverts ou fermés au niveau de leur extrémité libre.

53. Produit à poils selon la revendication 51 ou 52, **caractérisé en ce que** le poil creux (104) entoure un poil noyau (105) le remplissant.

54. Produit à poils selon la revendication 53, **caractérisé en ce que** le poil creux (104) entoure un poil noyau (105) le remplissant en un autre plastique.

55. Produit à poils selon la revendication 53 ou 54, **caractérisé en ce que** le poil creux (104) est perforé et le poil noyau (105) entouré par celui-ci traverse la perforation (106, 108) en formant des saillies (107, 109) au niveau du côté extérieur du poil (103).

56. Produit à poils selon la revendication 49, **caractérisé en ce qu'**au moins une partie des poils (103) présente des prolongements de type doigt (111).

57. Produit à poils selon la revendication 49, **caractérisé en ce qu'**au moins une partie des poils (9) présente un plastique rempli de particules et/ou de fibres.

58. Produit à poils selon la revendication 49, **caractérisé en ce qu'**au moins une partie des poils (103) présente des structures (132) s'étendant de manière essentiellement parallèle à l'axe, réduisant les forces de liaison secondaires transversalement à l'orientation moléculaire.

59. Produit à poils selon la revendication 58, **caractérisé en ce que** les poils (103) peuvent être désintégrés le long des structures (132) en doigts ou similaires.

60. Produit à poils selon la revendication 49, **caractérisé en ce qu'**au moins une partie des poils (9) est en un plastique conduisant de l'énergie.

61. Produit à poils selon la revendication 60, **caractérisé en ce que** les poils (9) sont au moins dans leur noyau en un plastique transparent, conduisant la lumière.

62. Produit à poils selon la revendication 49, **caractérisé en ce que** le support (6) présente au moins un évidement (8) et au moins un passage (7) part de chaque évidement et l'évidement est rempli de plastique (80) des poils (9).

63. Produit à poils selon la revendication 49, **caractérisé en ce que** le support (6) et/ou les poils (9) sont en plastiques différents.

64. Produit à poils selon la revendication 49, **caractérisé en ce que** le support (6) est formé de plusieurs couches au moins dans des parties de zone.

65. Produit à poils selon la revendication 49, **caractérisé en ce que** le support (6) est au moins en partie en un plastique souple et/ou élastique.

66. Produit à poils selon la revendication 49, **caractérisé en ce que** les poils sont en un plastique antimicrobien.

67. Produit à poils selon la revendication 49, **caractérisé en ce que** le support est antimicrobien.
